# EUROPEAN PATENT APPLICATION

(11) **EP 2 607 648 A1**
(43) Date of publication of application: **26.06.2013**
(21) Application number: 10814682.0
(22) Date of filing: 20.08.2010
(51) Int. Cl.: F02B 67/06

(54) **CONTROL SYSTEM FOR VEHICLE**

(71) Applicant: TOYOTA JIDOSHA KABUSHIKI KAISHA, Toyota-shi, Aichi-ken, 471-8571 (JP)
(72) Inventor: ITO, Yoshio, Aichi 471-8571 (JP)
(74) Representative: Kuhnen & Wacker
(86) International application number: PCT/JP2010/064107
(87) International publication number: WO 2012/023210

(57) **Abstract**

An auxiliary machine performance can be appropriately secured by being provided with a power transmitting apparatus (5) including a clutch portion (C1) which can disconnect a traveling drive source (3) and an output member (51), an auxiliary machine (11) which can be driven by a power from the traveling drive source (3) and can be driven by a power from a drive wheel (4) transmitted via the output member (51), an auxiliary machine driving mechanism (12) which can switch the power transmitted to the auxiliary machine (11) between the power from the traveling drive source (3) and the power from the drive wheel (4), an electric motor (13) which can drive the auxiliary machine (11), and a control apparatus (7) which controls the electric motor (13) and drives the auxiliary machine (11) by the power generated by the electric motor (13), when a vehicle speed of a vehicle (2) is equal to or less than a predetermined vehicle speed, in a state in which an operation of the traveling drive source (3) stops and the traveling drive source (3) and the output member (51) are disconnected by the clutch portion (C1).

## Description

### Field

The present invention relates to a vehicle controlling system.

### Background

As a conventional vehicle controlling system, for example, in patent document 1, there is disclosed a regenerative braking apparatus provided with a power source generating a rotation torque, a clutch means connected to the power source and controlling a transmission of the rotation torque, a transmitting means connected to the clutch means, a rotation number selecting means connected to the clutch means and picking up the rotation torque from a higher one of a power source side rotation number of the clutch means and a transmitting means side rotation number of the clutch means, and a power generator serving as an auxiliary machine to which the rotation torque picked up by the rotation number selecting means is transmitted.
Citation List
Patent Literature

Patent Literature 1: Japanese Patent Application Laid-open No. 2009-207243

### Summary

### Technical Problem

In this case, in the regenerative braking apparatus described in the patent document 1 as mentioned above, for example, it is desirable to secure a auxiliary machine performance more appropriately.

The present invention is made by taking the circumstances mentioned above into consideration, and an object of the present invention is to provide a vehicle controlling apparatus which can appropriately secure an auxiliary machine performance.

### Solution to Problem

In order to achieve the above mentioned object, a vehicle controlling system according to the present invention includes a power transmitting apparatus including an output member that is transmitted a power from a traveling drive source driving a drive wheel and making a vehicle travel and is capable of transmitting the power mutually with respect to the drive wheel, and a clutch portion that disconnects the traveling drive source and the output member and is capable of shutting off a power transmission between the traveling drive source and the output member; an auxiliary machine that is drivable by the power from the traveling drive source, and is drivable by the power from the drive wheel transmitted via the output member; an auxiliary machine driving mechanism that is capable of switching the power transmitted to the auxiliary machine between the power from the traveling drive source and the power from the drive wheel; an electric motor that is capable of driving the auxiliary machine; and a control apparatus that controls the electric motor and drives the auxiliary machine on the basis of the power generated by the electric motor, when a vehicle speed of the vehicle is equal to or less than a predetermined vehicle speed, in a state in which an operation of the traveling drive source stops and the traveling drive source and the output member are disconnected by the clutch portion.

Further, in the vehicle controlling system, it is possible to configure that the auxiliary machine includes a pump pressurizing a medium used in the vehicle, the power transmitting apparatus is provided in a transmission route of the power from the traveling drive source to the drive wheel and is actuated by the pressure of the medium so as to transmit the power in accordance with the pressure of the medium, and the predetermined vehicle speed is a vehicle speed that is in accordance with a necessary flow rate of the medium in the vehicle and a discharge flow rate of the medium by the pump.

Further, in the vehicle controlling system, it is possible to configure that the predetermined vehicle speed is changed in accordance with a temperature of the medium.

Further, in the vehicle controlling system, it is possible to configure that the predetermined vehicle speed is changed in accordance with a time degradation of the medium.

Further, in the vehicle controlling system, it is possible to further include a pressure accumulating mechanism that is capable of accumulating the pressure of the medium pressurized by the pump; and a switching portion that is capable of switching an operation state of the pressure accumulating mechanism to a supply and discharge state of supplying and discharging the pressure of the medium, and a pressure accumulating state retaining the accumulated pressure.

Further, in the vehicle controlling system, it is possible to configure that the control apparatus controls the switching portion and sets the pressure accumulating mechanism to the supply and discharge state so as to accumulate the pressure of the medium, when the traveling drive source is in an operating state, or when the operation of the traveling drive source stops at an inertia traveling time of the vehicle and the traveling drive source and the output member are disconnected by the clutch, and when the operation of the electric motor stops.

Further, in the vehicle controlling system, it is possible to configure that the control apparatus controls the switching portion so as to set the pressure accumulating mechanism to the supply and discharge state, discharge the pressure of the medium and use the pressure for operating the clutch, when setting the clutch portion to an engaged state in which the power is transmittable between the traveling drive source and the output member, at a time of starting the traveling drive source.

Further, in the vehicle controlling system, it is possible to configure that the control apparatus carries out a control of controlling the switching portion so as to discharge the pressure accumulated by the pressure accumulating mechanism in preference to a control of driving the pump by the power generated by the electric motor, at a time of using the pressure of the medium. Advantageous Effects of Invention

The vehicle controlling system in accordance with the present invention achieves such an effect that it is possible to appropriately secure the auxiliary machine performance.

### Brief Description of Drawings

FIG. 1 is a schematic view showing an outline structure of a vehicle controlling system in accordance with a first embodiment.
FIG. 2 is a schematic structural view of a vehicle in accordance with the first embodiment.
FIG. 3 is an alignment chart in a state in which an engine is actuated in the vehicle controlling system in accordance with the first embodiment.
FIG. 4 is an alignment chart in a state in which the actuation of the engine is stopped in the vehicle controlling system in accordance with the first embodiment.
FIG. 5 is a graph showing an example of a corresponding relationship between a vehicle speed and an input rotation number in the vehicle controlling apparatus in accordance with the first embodiment.
FIG. 6 is a flow chart explaining an example of a control in the vehicle controlling system in accordance with the first embodiment.
FIG. 7 is a schematic view showing an outline structure of a hydraulic controlling apparatus in accordance with a second embodiment.
FIG. 8 is a schematic view showing an outline structure of a vehicle controlling system in accordance with a third embodiment.
FIG. 9 is an alignment chart in a state in which an actuation of an engine is stopped in the vehicle controlling system in accordance with the third embodiment.
FIG. 10 is a schematic view showing an outline structure of a vehicle controlling system in accordance with a fourth embodiment.
FIG. 11 is an alignment chart in a state in which an actuation of an engine is stopped in the vehicle controlling system in accordance with the fourth embodiment.
FIG. 12 is a schematic view showing an outline structure of a vehicle controlling system in accordance with a fifth embodiment.
FIG. 13 is an alignment chart in a state in which an engine is actuated in the vehicle controlling system in accordance with the fifth embodiment.
FIG. 14 is an alignment chart in a state in which an actuation of the engine is stopped in the vehicle controlling system in accordance with the fifth embodiment. Description of Embodiments

A description will be in detail given below of embodiments in accordance with the present invention on the basis of the accompanying drawings. However, the present invention is not limited by the embodiments. Further, constructing elements in the following embodiments include those which can easily be conceived by those skilled in the art, or substantially identical elements.

### First Embodiment

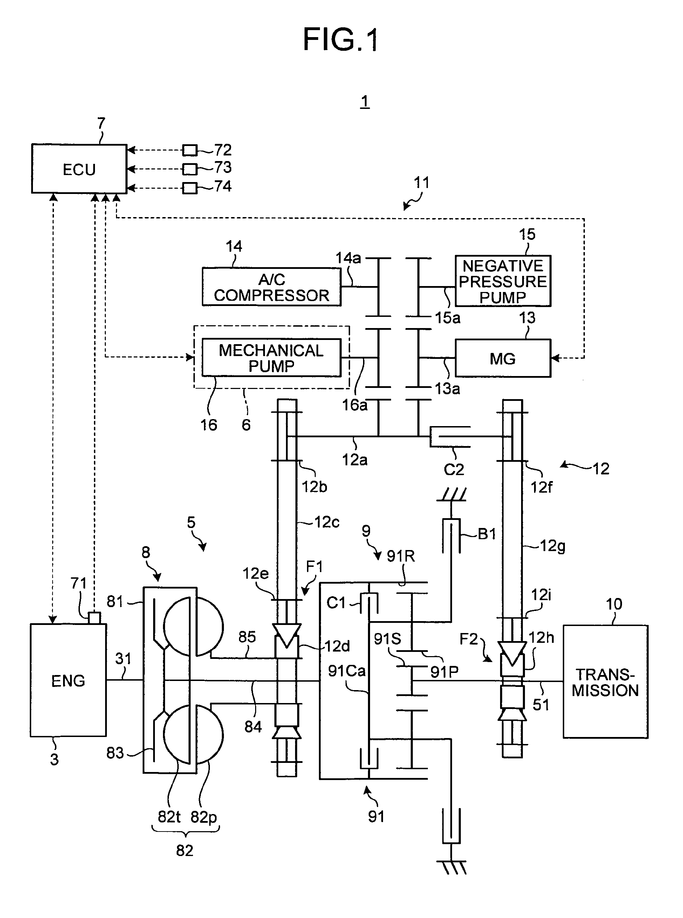

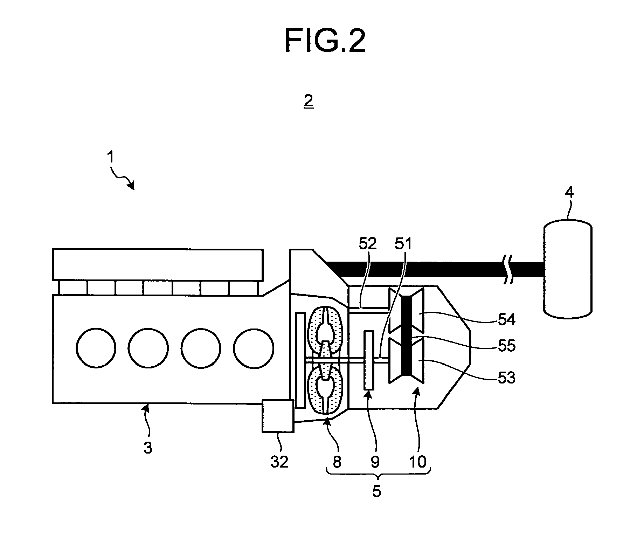

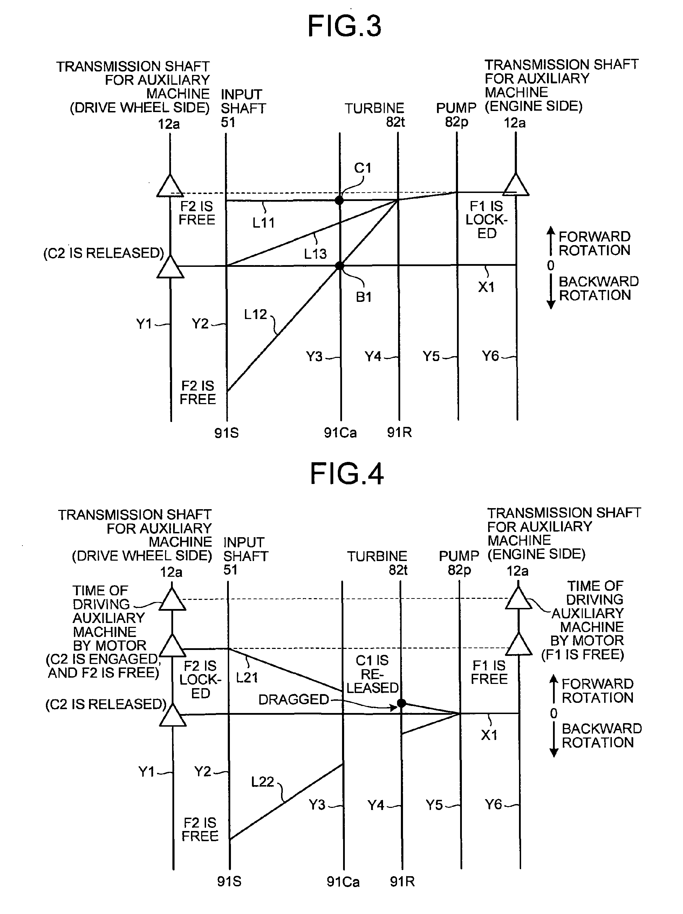

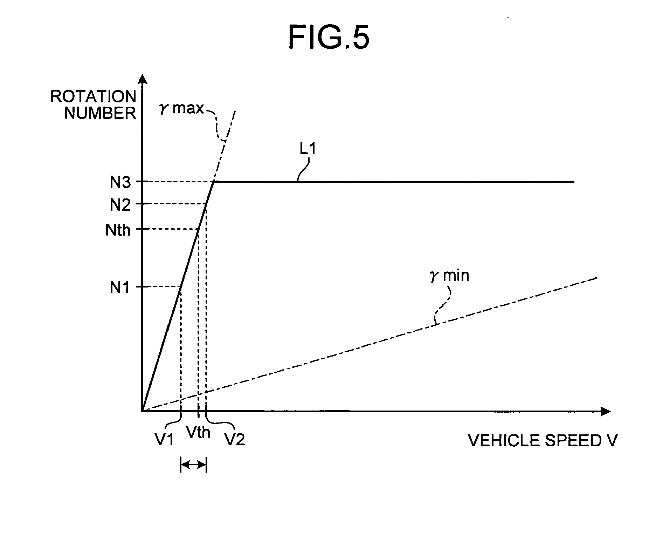

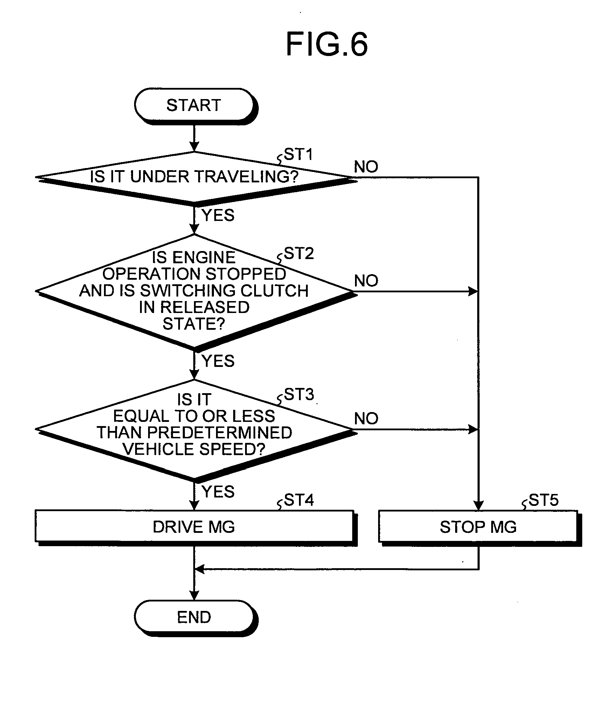

FIG. 1 is a schematic view showing an outline structure of a vehicle controlling system in accordance with a first embodiment. FIG. 2 is a schematic structure view of a vehicle in accordance with the first embodiment. FIG. 3 is an alignment chart in a state in which an engine is actuated (an engine driving time) in the vehicle controlling system in accordance with the first embodiment. FIG. 4 is an alignment chart in a state in which the actuation of the engine is stopped (an inertia travelling time) in the vehicle controlling system in accordance with the first embodiment. FIG. 5 is a graph showing an example of a corresponding relationship between a vehicle speed and an input rotation number in the vehicle controlling system in accordance with the first embodiment. FIG. 6 is a flow chart explaining an example of control in the vehicle controlling system in accordance with the first embodiment.

A vehicle controlling system 1 in accordance with the present embodiment is a system which is mounted on a vehicle 2 and is provided for controlling the vehicle 2, as shown in FIGS. 1 and 2. The vehicle controlling system 1 is a system achieving an improvement of a fuel consumption by disconnecting an engine 3 serving as a traveling drive source from a drive wheel 4 side during a travel of the vehicle 2 so as to lower a mechanical load (a friction) and carry out an inertia travelling, and connecting a traveling drive source and the drive wheel side under a predetermined condition. For example, the vehicle controlling system 1 comes to a state in which the actuation of the engine 3 stops, by executing a fuel cut to the engine 3, during the inertia traveling of the vehicle 2, whereby it is possible to achieve a further improvement of the fuel consumption.

Specifically, the vehicle controlling system 1 is provided with an engine 3, a drive wheel 4, a power transmitting apparatus 5, a hydraulic controlling apparatus 6, and an ECU 7 serving as a controlling device.

The engine 3 is a traveling drive source (a prime mover) making the vehicle 2 travel, and consumes the fuel so as to generate a power acting on the drive wheel 4 of the vehicle 2. The engine 3 makes a crank shaft 31 corresponding to an engine output shaft generate a mechanical power (an engine torque) in accordance with a combustion of the fuel, and can output the mechanical power from the crank shaft 31 toward the drive wheel 4. Further, the engine 3 is provided with a starter 32 or the like rotationally starting (cranking) the crank shaft 31.

The power transmitting apparatus 5 is provided in a transmission route of the power from the engine 3 to the drive wheel 4, is actuated by a pressure (a hydraulic pressure) of a working fluid serving as a medium and transmits the power in correspondence to the pressure of the working fluid. The power transmitting apparatus 5 is structured such as to include an input shaft 51 serving as an output member to which the power from the engine 3 is transmitted and which can transmit the power mutually with respect to the drive wheel 4, and a switching clutch C1 serving as a clutch portion which disconnects the engine 3 and the input shaft 51 and can shut down the power transmission between the engine 3 and the input shaft 51.

In more detail, the power transmitting apparatus 5 is structured such as to include a torque converter 8, a forward/backward movement switching mechanism 9, a transmission 10 and the like, the input shaft 51 constructs a transmission input shaft of the transmission 10, and the switching clutch C1 constructs a forward/backward movement switching clutch of the forward/backward movement switching mechanism 9. In the power transmitting apparatus 5, the crank shaft 31 of the engine 3 and the input shaft 51 of the transmission 10 are connected via the torque converter 8, the forward/backward movement switching mechanism 9 and the like, and the input shaft 51 of the transmission 10 is connected to the drive wheel 4 via a differential mechanism, a drive shaft and the like.

The torque converter 8 transmits the power which is transmitted to a front cover 81 integrally rotatably connected to the crank shaft 31 to an output shaft 84, while amplifying a torque via a fluid transmitting mechanism 82 constructed by a pump 82p and a turbine 82t, or while keeping its own torque via a lockup clutch 83. In the torque converter 8, the lockup clutch 83 is switched to a released state (a lockup OFF) and an engaged state (a lockup ON) in accordance with a pressure of the working fluid supplied from a hydraulic controlling apparatus 6 mentioned below.

The forward/backward movement switching mechanism 9 can shift a power (a rotation output) from the engine 3 and can switch a rotation direction thereof, and is structured such as to include a planetary gear mechanism 91, the switching clutch C1 and a switching brake B1. The planetary gear mechanism 91 is a differential mechanism which is structured such as to include a sun gear 91S constructed as an external gear, a ring gear 91R constructed as an internal gear arranged concentrically with the sun gear 91S, and a carrier 91Ca supporting a pinion gear 91P engaging with the sun gear 91S and the ring gear 91R so as to freely rotate on its own axis and freely revolve, as a plurality of rotating elements which can rotate differentially with each other. The ring gear 91R is connected to the output shaft 84 integrally rotatably. The sun gear 91S is connected to the input shaft 51 integrally rotatably. The carrier 91Ca can be connected to the ring gear 91R via the switching clutch C1, and can be connected to a fixed portion (for example, a casing) via the switching brake B1.

The switching clutch C1 and the switching brake B1 are engagement elements for switching the actuation state of the forward/backward movement switching mechanism 9, and can be constructed, for example, by a friction type engagement mechanism such as a multiple disc clutch or the like or a mating type engagement mechanism such as a dog clutch or the like. A hydraulic type multiple disc clutch is used here. The switching clutch C1 selectively connects the ring gear 91R and the carrier 91Ca, and the switching brake B1 selectively connects the carrier 91Ca and the fixed portion. For example, the switching clutch C1 can disconnect the engine 3 and the input shaft 51 so as to shut off the power transmission between the engine 3 and the input shaft 51, by disconnecting the ring gear 91R and the carrier 91Ca and shutting off the power transmission between the ring gear 91R and the carrier 91Ca. In other words, the switching clutch C1 can switch to an engaged state in which the ring gear 91R and the carrier 91Ca are connected, and a released state in which the connection is cancelled, whereby it is possible to switch to a power transmission state (an engaged state) in which the power is transmitted between the rotating member (the crank shaft 31 and the output shaft 84) close to the engine 3 and the rotating member (the input shaft 51) close to the drive wheel 4, and a shutoff state (a released state) in which the power transmission is shut off.

The forward/backward movement switching mechanism 9 is structured such that the switching clutch C1 and the switching brake B1 are actuated on the basis of the pressure of the working fluid supplied from the hydraulic controlling apparatus 6 mentioned below and the actuation state is switched. The forward/backward movement switching mechanism 9 transmits the power from the engine 3 to the input shaft 51 in a forward rotating state (a direction in which the input shaft 51 is rotated at a time when the vehicle 2 moves forward), in the case that the switching clutch C1 is in an engaged state (an ON state) and the switching brake B1 is in a released state (an OFF state). The forward/backward movement switching mechanism 9 transmits the power from the engine 3 to the input shaft 51 in a backward rotating state (a direction in which the input shaft 51 is rotated at a time when the vehicle 2 moves backward), in the case that the switching clutch C1 is in the released state and the switching brake B1 is in the engaged state. In the forward/backward movement switching mechanism 9, the switching clutch C1 and the switching brake B1 are both set to the released state, at a neutral time.

The transmission 10 is provided between the switching clutch C1 and the drive wheel 4 in the transmission route of the power from the engine 3 to the drive wheel 4 and can shift and output the power of the engine 3. The transmission 10 is actuated by the pressure of the working fluid supplied from the hydraulic controlling apparatus 6 mentioned below and transmits the power in accordance with the pressure of the working fluid. The transmission 10 shifts the rotating power (the rotating output) from the engine 3 which is transmitted (input) to the input shaft 51 at a predetermined transmission ratio so as to transmit to an output shaft 52 corresponding to the transmission output shaft, and outputs the shifted power from the output shaft 52 to the drive wheel 4. In this case, the transmission 10 is exemplified by a belt type continuously variable transmission (CVT) structured in such a manner as to include a primary pulley 53 connected to the input shaft 51 serving as a primary shaft, a secondary pulley 54 connected to the output shaft 52 serving as a secondary shaft, a belt 55 bridged between the primary pulley 53 and the secondary pulley 54, and the like, as one example. The transmission 10 carries out a speed change motion in accordance with the pressure of the working fluid supplied to the various hydraulic pressure chambers from the hydraulic controlling apparatus 6 mentioned below, continuously changes the transmission ratio corresponding to the input rotation number (a primary rotation number) corresponding to the input rotation speed of the primary pulley 53 and the output shaft rotation number (a secondary rotation number) corresponding to the output rotation speed of the secondary pulley 54, regulates a force (a belt pinching force) by which the secondary pulley 54 or the like pinches the belt 55, and transmits the power at a torque capacity corresponding thereto.

The power transmitting apparatus 5 constructed as mentioned above can transmit the power generated by the engine 3 to the drive wheel 4 via the torque converter 8, the forward/backward movement switching mechanism 9, the transmission 10 and the like. As a result, the vehicle 2 generates a driving force [N] on a ground plane between the drive wheel 4 and the road surface, and can accordingly travel.

The hydraulic controlling apparatus 6 is structured such as to actuate the power transmitting apparatus 5 including the engagement elements of the lockup clutch 83, the switching clutch C1 and the switching brake B1 on the basis of the hydraulic pressure of the working fluid serving as a fluid. The hydraulic controlling apparatus 6 is structured, for example, such as to include various known hydraulic circuits which are controlled by the ECU 7. The hydraulic controlling apparatus 6 is structured such as to include a plurality of oil paths, an oil reservoir, an oil pump, a plurality of electromagnetic valves and the like, and controls a flow rate or a hydraulic pressure of the working fluid supplied to each of the portions of the power transmitting apparatus 5 corresponding to a signal from the ECU 7 mentioned below.

The ECU 7 is structured such as to control the drive of each of the portions of the vehicle 2. The ECU 7 is an electronic circuit mainly constructed by a well-known microcomputer including a CPU, ROM, RAM and an interface. The ECU 7 is electrically connected to various sensors and detecting apparatuses which are provided in the portions of the vehicle 2, for example, an engine rotation number sensor 71 detecting an operation amount of an accelerator pedal (an accelerator operation amount) by a driver such as an engine rotation number, an accelerator opening degree sensor 72 detecting an accelerator opening degree, a primary rotation sensor 73 detecting an input rotation number (a primary rotation number) corresponding to a rotation number of the primary pulley 53, a vehicle speed sensor 74 detecting a vehicle speed corresponding to a traveling speed of the vehicle 2, and the like. For example, the ECU 7 regulates a throttle opening degree on the basis of the accelerator opening degree, the vehicle speed and the like so as to regulate an intake air amount to the engine 3, controls a fuel injection amount in accordance with a change thereof, and regulates an amount of a mixed air filled in a combustion chamber so as to control the output of the engine 3, at a normal driving time. Further, the ECU 7 regulates the transmission ratio, typically the input rotation number to the transmission 10, on the basis of the accelerator opening degree, the vehicle speed and the like, and carries out a shift control of the transmission 10.

The ECU 7 can switch an operating state and a non-operating state of the engine 3 by starting the engine 3 or stopping the operation. In this case, the state in which the engine 3 is operated means a state in which a heat energy generated by burning the fuel in the combustion chamber is output in a form of a mechanical energy such as a torque or the like. On the other hand, the non-operating state of the engine 3, that is, the state in which the operation of the engine 3 is stopped means a state in which the fuel is not burnt in the combustion chamber and the mechanical energy such as the torque or the like is not output.

Further, the ECU 7 can, for example, stop the fuel consumption in the engine 3 so as to set to the non-operating state and give way to a control forming a so-called free-run state, during an inertia traveling of the vehicle 2 or the like. The ECU 7 disconnects the engine 3 and the input shaft 51 so as to disconnect the engine 3 from the drive wheel 4 side by controlling the hydraulic controlling apparatus 6 so as to set the switching clutch C1 to the released state, for example, at a speed decreasing time of the vehicle 2 caused by a coast travel in accelerator-off or in the case that the engine rotation speed is equal to or more than a predetermined rotation number, stops the fuel supply to the combustion chamber of the engine 3 (fuel cut) in accordance with a circumstance, and executes such a control as to stop the generation of the power by the engine 3. Accordingly, the ECU 7 can carry out an inertia travel (which may be called also as an inertial travel) of traveling through inertia on the basis of an inertial force of the vehicle by reducing a mechanical load (friction) without making the engine 3 output any mechanical power, and can improve a fuel consumption. In this case, since the switching brake B1 is in the released state (the OFF state) during the forward traveling, the vehicle 2 basically comes to a state in which the engine 3 and the input shaft 51 are disconnected, by changing the switching clutch C1 from the engaged state to the released state.

In this case, the vehicle controlling system 1 in accordance with the present embodiment is provided with an auxiliary machine 11, and an auxiliary machine driving mechanism 12 driving the auxiliary machine 11, and is further provided with a motor generator 13 (hereinafter, abbreviated as "motor 13" unless otherwise noted) as an electric motor driving the auxiliary machine 11 in accordance with the circumstance, whereby a performance of the auxiliary machine 11 is more appropriately secured.

The auxiliary machine 11 is an apparatus for assisting the travel of the vehicle 2, and is structured such as to include various apparatuses which are necessary to be rotationally driven, for example, an A/C compressor 14 corresponding to a compressor of an air conditioner, a negative pressure pump 15 for generating a negative pressure used in the brake, a mechanical pump 16 serving as a pump, and the like.

The auxiliary machine 11 can be driven by the power from the engine 3, and can be driven by the power from the drive wheel 4 transmitted via the input shaft 51. The A/C compressor 14, the negative pressure pump 15 and the mechanical pump 16 mate with a transmission shaft 12a of the auxiliary machine driving mechanism 12 via gears or the like in their drive shafts 14a, 15a and 16a, and can be driven by the power transmitted from the transmission shaft 12a. The auxiliary machine 11 is transmitted the power from the engine 3 via one-way clutch F1 from the engine 3, by the auxiliary machine driving mechanism 12, and can be driven by the power from the engine 3. Further, the auxiliary machine 11 is transmitted the power from the drive wheel 4 via a one-way clutch F2 from the input shaft 51, by the auxiliary machine driving mechanism 12, and can be driven by the power from the drive wheel 4.

For example, the negative pressure pump 15, which is structured such as to supply an assist negative pressure to the braking apparatus of the vehicle 2, is transmitted the power from the transmission shaft 12a to the drive shaft 15a so as to drive while synchronously working with the rotation of the transmission shaft 12a, and supplies the negative pressure to a negative pressure tank of a negative pressure type brake servo unit utilizing an intake air negative pressure of the engine 3. The mechanical pump 16 forms a part of the hydraulic controlling apparatus 6, and is a mechanical pump which drives on the basis of the transmitted power and pressurizes the working fluid serving as a medium used in the vehicle 2. The mechanical pump 16 is transmitted the power from the transmission shaft 12a to the drive shaft 16a so as to drive while synchronously working with the rotation of the transmission shaft 12a, and can discharge the sucked working fluid after pressurizing.

The auxiliary machine driving mechanism 12 can switch the power transmitted to the auxiliary machine 11 by the power from the engine 3 and the power from the drive wheel 4. In other words, the auxiliary machine driving mechanism 12 can switch the power from the engine 3 and the power from the drive wheel 4 so as to transmit to the auxiliary machine 11, and can drive the auxiliary machine 11.

The auxiliary machine driving mechanism 12 in accordance with the present embodiment is structured such as to include the transmission shaft 12a, the one-way clutch F1, the one-way clutch F2, and the auxiliary machine clutch C2. The transmission shaft 12a is a transmission member for transmitting the power to the auxiliary machine 11. The one-way clutch F1 is structured such as to allow the power transmission from the crank shaft 31 of the engine 3, the pump 82p of the torque converter 8 connected to the crank shaft 31 in this case to the transmission shaft 12a (a lock state), and block the power transmission from the transmission shaft 12a to the pump 82p (a free state). The one-way clutch F2 is structured such as to allow the power transmission from the input shaft 51 to the transmission shaft 12a (a lock state), and block the power transmission from the transmission shaft 12a to the input shaft 51 (a free state). The auxiliary clutch C2 can switch a power transmission state (an engaged state) in which the power is transmitted between the input shaft 51 and the auxiliary machine 11, and a shutoff state (a released state) in which the power transmission is shut off.

Specifically, the transmission shaft 12a is structured such that a belt 12c is wound around a pulley 12b connected in such a manner as to be integrally rotatable. The belt 12c is wound around an outer ring 12e of the one-way clutch F1 to which an inner ring 12d is connected in such a manner as to be integrally rotatable with a blanket 85 of the torque converter 8, and the pulley 12b. The blanket 85 is connected in such a manner as to be integrally rotatable with the crank shaft 31 via the pump 82p of the fluid transmitting mechanism 82, the front cover 81 and the like. Further, the transmission shaft 12a is structured such that a belt 12g is wound around a pulley 12f which is connected to be integrally rotatable. The belt 12g is wound around an outer ring 12i of the one-way clutch F2 in which an inner ring 12h is connected to the input shaft 51 so as to be integrally rotatable, and the pulley 12f.

The one-way clutches F1 and F2 allow the rotation only in one direction, and regulate the rotation in the other direction. The one-way clutches F1 and F2 are respectively structured such that the inner rings 12d and 12h and the outer rings 12e and 12i are integrally rotated in the case that the rotation numbers of the inner rings 12d and 12h are equal to or more than the rotation numbers of the outer rings 12e and 12i, and the inner rings 12d and 12h and the outer rings 12e and 12i are rotated separately in the case that the rotation numbers of the inner rings 12d and 12h are less than the rotation numbers of the outer rings 12e and 12i.

The auxiliary machine clutch C2 is an engagement element for switching the operating state of the auxiliary machine driving mechanism 12, and employs, for example, the hydraulic type multiple disc clutch, in the same manner as the switching clutch C1 or the like. The auxiliary machine clutch C2 is provided in the transmission shaft 12a, and can switch the power transmission state (the engaged state) in which the power is transmitted between the input shaft 51 and the auxiliary machine 11, and the shutoff state (the released state) in which the power transmission is shut off, as mentioned above. The auxiliary machine driving mechanism 12 is structured such that the auxiliary machine clutch C2 is actuated by the pressure of the working fluid supplied from the hydraulic controlling apparatus 6 and the operating state is switched.

The auxiliary machine driving mechanism 12 structured as mentioned above is structured such that the power (the driving force) from the engine 3 is transmitted to the transmission shaft 12a via the one-way clutch F1, the belt 12c, the pulley 12b or the like, is driven while synchronously working with the rotation of the crank shaft 31, and can transmit the power from the engine 3 side to the auxiliary machine 11. On the other hand, the auxiliary machine driving mechanism 12 is structured such that the power (the driven force) from the drive wheel 4 side is transmitted to the transmission shaft 12a via the one-way clutch F2, the belt 12g, the pulley 12f and the like, drives while synchronously working with the rotation of the input shaft 51 at a time of the inertia traveling of the vehicle 2, and can transmit the power from the drive wheel 4 side to the auxiliary machine 11.

For example, the auxiliary machine driving mechanism 12 is set such that a speed ratio between the pulley 12b and the outer ring 12e of the one-way clutch F1 is approximately equal to a speed ratio between the pulley 12f and the outer ring 12i of the one-way clutch F2. In this case, the auxiliary machine driving mechanism 12 is structured, for example, such that the power of the pump 82p, that is, the power from the engine 3 is transmitted to the transmission shaft 12a in the case that the rotation number of the pump 82p is higher than the rotation number of the input shaft 51. In other words, the auxiliary machine driving mechanism 12 is structured such that the transmission shaft 12a is rotationally driven by the power transmitted from the engine 3 side. On the other hand, the auxiliary machine driving mechanism 12 is structured such that the power of the input shaft 51, that is, the power from the drive wheel 4 is transmitted to the transmission shaft 12a in the case that the auxiliary machine clutch C2 is in the engaged state and the rotation number of the pump 82p is lower than the rotation number of the input shaft 51. In other words, the auxiliary machine driving mechanism 12 is structured such that the transmission shaft 12a is rotationally driven by the power transmitted from the drive wheel 4 via the input shaft 51 corresponding to the shaft connected to the drive wheel 4 closer to the drive wheel 4 than the switching clutch C1.

As mentioned above, the auxiliary machine driving mechanism 12 is typically structured such that the connected portion of the auxiliary machine 11 can be selectively switched to any one of the pump 82p (the crank shaft 31) and the input shaft 51, in such a manner that the power having the higher rotation number among the rotation number of the engine 3, the rotation number of the pump 82p of the torque converter 8 in this case, and the rotation number of the input shaft 51 is transmitted to the auxiliary machine 11. In this case, in the auxiliary machine driving mechanism 12, the speed ratio between the pulley 12b and the outer ring 12e of the one-way clutch F1 may be different from the speed ratio between the pulley 12f and the outer ring 12i of the one-way clutch F2. In this case, in the auxiliary machine driving mechanism 12, the connected portion of the auxiliary machine 11 is switched in accordance with the rotation number of the pump 82p, the rotation number of the input shaft 51 and the difference of the speed ratios.

Further, the vehicle controlling system 1 drives the auxiliary machine 11 on the basis of the power generated by the motor 13 in accordance with the operating state of the vehicle 2. The motor 13 is a dynamo-electric machine combining a function serving as an electric motor converting an electric power supplied from a battery via an inverter or the like into a mechanical power, and a function serving as a power generator converting an input mechanical power into an electric power. In the motor 13, a rotor is connected to a drive shaft 13a engaging with the transmission shaft 12a via a gear or the like so as to be capable of transmitting the power in such a manner as to be integrally rotatable, and transmits the power to the transmission shaft 12a by driving so as to be capable of driving the transmission shaft 12a. Accordingly, the motor 13 can drive various auxiliary machineries 11 including the mechanical pump 16 and the like.

In this case, FIGS. 3 and 4 show alignment charts which can express a relative relationship of the rotation numbers of the respective rotating elements in the vehicle controlling system 1. FIG. 3 shows a state (an engine driving time) in which the engine 3 drives, and FIG. 4 shows a state (an inertia traveling time) in which the fuel cut is executed with respect to the engine 3. The alignment charts is a two-dimensional coordinate showing a relative relationship of a planetary gear mechanism 91 in a horizontal axial direction, and showing a relative rotation speed in a vertical axial direction. A horizontal line X1 in the horizontal axis shows a rotation speed "0". Vertical lines Y1 to Y6 correspond to the respective rotating elements, the vertical line Y1 indicates the pulley 12f close to the drive wheel 4 of the transmission shaft 12a, the vertical line Y2 indicates the sun gear 91S and the input shaft 51, the vertical line Y3 indicates the carrier 91Ca, the vertical line Y4 indicates the ring gear 91R and the turbine 82t, the vertical line Y5 indicates the pump 82p (the crank shaft 31), and the vertical line Y6 indicates the relative rotation speed of the pulley 12b close to the engine 3 of the transmission shaft 12a. Intervals among the vertical lines Y2, Y3 and Y4 are determined in accordance with a gear ratio p of the planetary gear mechanism 91. In other words, on the assumption that the interval between the vertical line Y2 and the vertical line Y3 is set to "1", the interval between the vertical line Y3 and the vertical line Y4 corresponds to the gear ratio p. The vertical line Y1 corresponds to the rotation number which is transmitted from one end (the pulley 12f) close to the drive wheel 4 of the transmission shaft 12a to the auxiliary machine 11, and the vertical line Y6 corresponds to the rotation number which is transmitted from one end (the pulley 12b) close to the engine 3 of the transmission shaft 12a to the auxiliary machine 11. Further, in FIG. 3, a solid line L11 shows a power transmission state at a time when the vehicle 2 is under forward traveling, a solid line L12 shows a power transmission state at a time when the vehicle 2 is under backward traveling, and a solid line L13 shows a power transmission state at a time when the vehicle 2 is under stopping while being neutral. In FIG. 4, a solid line L21 shows a power transmission state at a time when the vehicle 2 is under forward traveling, and a solid line L22 shows a power transmission state at a time when the vehicle 2 is under backward traveling. In this case, in any of the power transmission states shown in these drawings, the lockup clutch 83 is switched to the released state (the lockup OFF).

The ECU 7 sets the switching clutch C1 to the engaged state, sets the switching brake B1 to the released state and sets the auxiliary machine clutch C2 to the released state, in the case that the engine 3 is in the operating state and the vehicle is under forward traveling, as shown in FIG. 3. In this case, since the auxiliary machine clutch C2 is under the released state, the transmission shaft 12a is transmitted the power from the engine 3 side. The rotation number (the vertical line Y6) of the pulley 12b close to the engine 3 of the transmission shaft 12a becomes equal to the rotation number (the vertical line Y5) of the pump 82p, and the rotation from the drive wheel 4 side via the input shaft 51 is not transmitted to the transmission shaft 12a and the auxiliary machine 11. Therefore, the auxiliary machine 11 is driven by the power from the engine 3 side. Since the power of the pump 82p is transmitted to the turbine 82t via the working fluid, however, is in the lockup OFF state, the rotation number (the vertical line Y4) of the turbine 82t is somewhat lowered in comparison with the rotation number (the vertical line Y5) of the pump 82p. The power of the turbine 82t is transmitted to the input shaft 51 via the planetary gear mechanism 91. At this time, in the planetary gear mechanism 91, since the switching clutch C1 is in the engaged state and the switching brake B1 is in the released state, the sun gear 91S, the carrier 91Ca and the ring gear 91R are integrally rotated, as shown by the solid line L11. Accordingly, the rotation number (the vertical line Y2) of the input shaft 51 becomes equal to the rotation number (the vertical line Y4) of the turbine 82t.

The ECU 7 sets the switching clutch C1 to the released state, sets the switching brake B1 to the engaged state and sets the auxiliary clutch C2 to the released state, in the case that the engine 3 is in the operating state and the vehicle 2 is under backward traveling, as shown in FIG. 3. In this case, since the auxiliary machine clutch C2 is in the released state in the same manner as the case of being under forward traveling, the rotation number (the vertical line Y6) of the pulley 12b close to the engine 3 of the transmission shaft 12a becomes equal to the rotation number (the vertical line Y5) of the pump 82p, and the rotation number (the vertical line Y1) of the pulley 12f close to the drive wheel 4 of the transmission shaft 12a comes to 0. Accordingly, in this case, the auxiliary machine 11 is transmitted the power from the engine 3 side via the transmission shaft 12a, and drives on the basis of the power from the engine 3 side. The power transmitted to the turbine 82t is changed its rotating direction to an inverted direction by the planetary gear mechanism 91 as shown by a solid line L12, and is thereafter transmitted to the input shaft 51.

The ECU 7 sets the switching clutch C1 to the released state, sets the switching brake B1 to the released state, and sets the auxiliary machine clutch C2 to the released state, in the case that the engine 3 is in the operating state, the neutral range is selected by the shift operating apparatus and the vehicle 2 is under stopping, as shown in FIG. 3. In this case, since the auxiliary machine clutch C2 is in the released state in the same manner as the cases of being under forward traveling and being under backward traveling, the rotation number (the vertical line Y6) of the pulley 12b close to the engine 3 of the transmission shaft 12a becomes equal to the rotation number (the vertical line Y5) of the pump 82p, and the rotation number (the vertical line Y1) of the pulley 12f close to the drive wheel 4 of the transmission shaft 12a comes to 0. Accordingly, in this case, the auxiliary machine 11 is transmitted the power from the engine 3 side via the transmission shaft 12a, and drives on the basis of the power from the engine 3 side. In this case, since the vehicle 2 is under stopping, the rotation number (the vertical axis Y2) of the input shaft 51, that is, the rotation number of the sun gear 91S comes to 0 as shown in a solid line L13. Further, the ring gear 91R and the carrier 91Ca are rotationally driven by the turbine 82t.

The ECU 7 sets the switching clutch C1 to the released state, sets the switching brake B1 to the released state and sets the auxiliary machine clutch C2 to the engaged state, in the case that the fuel cut is executed, the operation of the engine 3 is stopped and the vehicle 2 is under forward traveling, that is, in the case that the vehicle 2 travels through inertia in the forward moving direction, as shown in FIG. 4. In this case, since the operation of the engine 3 is in the stopping state under fuel cut, the rotation number (the vertical line Y5) of the pump 82p, that is, the rotation number of the crank shaft 31 of the engine 3 comes to 0. On the other hand, since the vehicle 2 is under traveling through inertia, the input shaft 51 is rotationally driven by the power from the drive wheel 4 side. Further, since the auxiliary machine clutch C2 is in the engaged state, the transmission shaft 12a is transmitted the power from the drive wheel 4 side via the input shaft 51. The rotation number (the vertical line Y1) of the pulley 12f close to the drive wheel 4 of the transmission shaft 12a, and the rotation number (the vertical line Y6) of the pulley 12b close to the engine 3 of the transmission shaft 12a become equal to the rotation number (the vertical line Y2) of the input shaft 51. Accordingly, the auxiliary machine 11 is driven by the power from the drive wheel 4 side. At this time, since the power transmission from the transmission shaft 12a to the pump 82p is blocked by the one-way clutch F1, the rotation number (the vertical line Y5) of the pump 82p, that is, the rotation number of the crank shaft 31 of the engine 3 is maintained at 0. Since the planetary gear mechanism 91 is structured such that the switching clutch C1 is in the released state and the switching brake B1 is in the released state, under this state, each of the carrier 91Ca, and the ring gear 91R is dragged by the rotation of the sun gear 91S so as to rotate as shown by a solid line L21. In this case, in the planetary gear mechanism 91, since the carrier 91Ca runs idle, the ring gear 91R hardly rotates. Accordingly, the power transmission between the input shaft 51 and the turbine 82t is limited.

As a result, in the vehicle controlling system 1, if the operation of the engine 3 stops under traveling of the vehicle 2 and the engine 3 and the input shaft 51 come to the state in which they are disconnected by the switching clutch C1, as mentioned above, the auxiliary machine 11 including the A/C compressor 14, the negative pressure pump 15, the mechanical pump 16 and the like is driven by the power from the drive wheel 4. Accordingly, the vehicle controlling system 1 can drive the auxiliary machine 11 including the A/C compressor 14, the negative pressure pump 15, the mechanical pump 16 and the like, by making good use of a kinetic energy caused by the inertia travel of the vehicle 2. As a result, it is possible to improve a fuel consumption. For example, the vehicle controlling system 1 can pressurize the working fluid which the mechanical pump 16 uses in the vehicle 2, even if the operation of the engine 3 is in the stop state. Further, in the vehicle controlling system 1, for example, if the operation of the engine 3 stops under traveling of the vehicle 2 and the engine 3 and the input shaft 51 come to the state in which they are disconnected by the switching clutch C1, as mentioned above, the supplied negative pressure to the negative type brake servo unit utilizing the air intake negative pressure of the engine 3 is also lowered in correspondence thereto, however, the negative pressure pump 15 is driven by the power from the drive wheel 4 in the same manner as the mechanical pump 16, and it is possible to supply the assist negative pressure to the braking apparatus of the vehicle 2.

In this case, in the case of starting the engine 3 from the state in which the vehicle 2 travels through inertia in the forward moving direction in the state in which the fuel cut is executed as mentioned above and the operation of the engine 3 stops, the ECU 7 sets the lockup clutch 83 to the engaged state (the lockup ON) as well as setting the switching clutch C1 to the engaged state. Accordingly, the power from the drive wheel 4 side is transmitted to the crank shaft 31 via the transmission 10, the forward/backward movement switching mechanism 9, the torque converter 8 and the like, the crank shaft 31 is rotationally started (cranked), and the engine 3 is so-called push-started. In this case, since the vehicle controlling system 1 can rotationally starts the crank shaft 31 without driving the starter 32, it is possible to lower an energy which is consumed at a time of restarting the engine 3.

Further, in the case that the vehicle 2 is under backward traveling in a state in which the fuel cut is executed and the operation of the engine 3 stops, that is, in the case that the vehicle 2 travels through inertia in the backward moving direction, as shown in FIG. 4, the ECU 7 sets the switching clutch C1 to the released state, sets the switching brake B1 to the released state, and sets the auxiliary machine clutch C2 to the engaged state, in the same manner as the case of traveling through inertia in the forward moving direction. In this case, since the power is not transmitted to the transmission shaft 12a from the drive wheel 4, as shown by a solid line L22, the rotation number of the transmission shaft 12a comes to 0. Accordingly, the rotation number (the vertical line Y1) of the pulley 12f close to the drive wheel 4 of the transmission shaft 12a, and the rotation number (the vertical line Y6) of the pulley 12b close to the engine 3 of the transmission shaft 12a come to 0.

Further, in the case that the vehicle speed of the vehicle 2 is equal to or less than a predetermined vehicle speed in the state in which the operation of the engine 3 stops and the engine 3 and the input shaft 51 are disconnected by the switching clutch C1, the ECU 7 controls the motor 13 and drives the auxiliary machine 11 including the A/C compressor 14, the negative pressure pump 15, the mechanical pump 16 and the like on the basis of the power generated by the motor 13.

In this case, for example, since the auxiliary machine 11 is driven while working with the rotation of the input shaft 51 on the basis of the power from the drive wheel 4, in the state in which the operation of the engine 3 stops and the engine 3 and the input shaft 51 are disconnected by the switching clutch C1 as mentioned above, there is such a tendency that the discharge flow amount of the mechanical pump 16 becomes smaller and the discharge oil pressure is lowered, for example, in accordance that the vehicle speed of the vehicle 2 is reduced and the rotation number of the input shaft 51 is lowered. Accordingly, in the vehicle controlling system 1, a sufficient discharge oil pressure can be obtained by the mechanical pump 16 in the case that the vehicle speed is higher than a predetermined value at a time of an inertia traveling of the vehicle 2, however, if the vehicle 2 is decelerated and is under a low speed state, there is a risk that the sufficient discharge oil pressure can not be obtained only by driving the mechanical pump 16 on the basis of the power from the drive wheel 4.

However, in the vehicle controlling system 1 in accordance with the present embodiment, in such a low vehicle speed traveling region that there is a risk that the sufficient discharge oil pressure can not be obtained only by driving the mechanical pump 16 on the basis of the power from the drive wheel 4, at a time of the inertia traveling of the vehicle 2 when the operation of the engine 3 stops and the engine 3 and the input shaft 51 are disconnected by the switching clutch C1, for that matter, in such a low vehicle speed traveling region that there is a risk that an appropriate driving of the auxiliary machine 11 is hard to be secured, the ECU 7 controls the motor 13 and drives the auxiliary machine 11 including the A/C compressor 14, the negative pressure pump 15, the mechanical pump 16 and the like on the basis of the power generated by the motor 13. At this time, in the vehicle controlling system 1, in the case of driving the auxiliary machine 11 by the motor 13, the one-way clutch F1 blocks the power transmission from the transmission shaft 12a to the pump 82p side, and the one-way clutch F2 blocks the power transmission from the transmission shaft 12a to the input shaft 51 side.

Accordingly, the vehicle controlling system 1 can appropriately secure an auxiliary machine performance including the A/C compressor 14, the negative pressure pump 15, the mechanical pump 16 and the like, even in the low vehicle speed traveling region of the vehicle 2, for example, without causing a cost increase due to an independent provision of the motor-driven pump. For example, it is possible to appropriately secure a transmission hydraulic pressure, a brake negative pressure, an air conditioning performance and the like. For that matter, the vehicle controlling system 1 can suppress, for example, the motor drive traveling region for driving the auxiliary machine 11 by driving the motor 13 and on the basis of the power generated by the motor 13 to a minimum region in the vicinity of the low vehicle speed traveling region in the state in which the operation of the engine 3 stops, as well as appropriately securing the auxiliary machine performance in a whole of the traveling region of the vehicle 2. As a result, it is possible to lower an electric power loss, and it is possible to improve the fuel consumption.

Further, since the vehicle controlling system 1 can appropriately secure the discharge performance of the mechanical pump 16 by the motor 13, for example, in the low vehicle speed traveling region of the vehicle 2 in the state in which the operation of the engine 3 stops, it is possible to inhibit an actual discharge oil pressure (discharge flow rate) of the working fluid from the mechanical pump 16 to the power transmitting apparatus 5 from falling short, with respect to a necessary oil pressure (a necessary flow rate) of the working fluid in the power transmitting apparatus 5. Accordingly, the vehicle controlling system 1 can appropriately secure the hydraulic pressure which is necessary for the speed change and the appropriate belt pinching force in the transmission 10, the hydraulic pressure which is necessary for actuating engagement elements such as the switching clutch C1, the switching brake B1, and the auxiliary clutch C2 and the like, even in the low vehicle speed traveling region of the vehicle 2 in the state in which the operation of the engine 3 stops, it is possible to secure an appropriate motion and an appropriate torque capacity, and it is possible to appropriately actuate the power transmitting apparatus 5 and the like.

Further, since the vehicle controlling system 1 can appropriately secure the performance of the negative pressure pump 15 by the motor 13, for example, even in the low vehicle speed traveling region of the vehicle 2 in the state in which the operation of the engine 3 stops, it is possible to appropriately secure the assist negative pressure to the negative pressure type brake servo unit.

In this case, the predetermined vehicle speed coming to a standard for determining the drive of the motor 13 is a determination value (a threshold value) which is set with respect to the vehicle speed for determining whether or not the motor 13 is driven, and is defined in accordance with the rotation number of the input shaft 51 having such a risk that it is hard to secure an appropriate drive of the auxiliary machine 11. The predetermined vehicle speed is set, for example, as a vehicle which is in accordance with the necessary oil pressure (the necessary flow rate) of the working fluid in the vehicle 2, and the discharge oil pressure (the discharge flow rate) of the working fluid by the mechanical pump 16. Mentioning in further detail, the predetermined vehicle speed is defined, for example, in accordance with the vehicle speed having such a risk that the sufficient discharge oil pressure can not be obtained with respect to the necessary oil pressure, only by driving the mechanical pump 16 on the basis of the power from the drive wheel 4. For example, the predetermined vehicle speed is set to a vehicle speed which is somewhat higher than the vehicle speed at which the discharge oil pressure by the mechanical pump 16 becomes lower than the necessary oil pressure of the working fluid in the vehicle 2, only by driving the mechanical pump 16 on the basis of the power from the drive wheel 4. The necessary oil pressure of the working fluid in the vehicle 2 is a total oil pressure, for example, of the oil pressure which is necessary for the speed change in the transmission 10 and the appropriate belt pinching force as mentioned above, the oil pressure which is necessary for actuating the engagement elements such as the switching clutch C1, the switching brake B1 and the like.

In this case, FIG. 5 sets a horizontal axis to a vehicle speed V of the vehicle 2, and sets a vertical axis to an input rotation number N corresponding to a rotation number of the input shaft 51. In FIG. 5, γmax shows a lowest side shift line in accordance with a largest transmission ratio of the transmission 10, γmin shows a highest side shift line in accordance with a smallest transmission ratio of the transmission 10, and L1 shows a coast shift line at a time of deceleration in an inertia traveling (a coast travel with accelerator off) of the vehicle 2.

The ECU 7 controls the transmission 10 along the coast shift line L1 so as to execute the shift control at a decelerating time at a time of the inertia traveling of the vehicle 2. The ECU 7 executes the shift control while setting a minimum input rotation number N3 to a target input rotation number, and maintains the maximum transmission ratio along the lowest side shift line γmax after an actual transmission ratio comes to the maximum transmission ratio.

A predetermined vehicle speed Vth coming to the standard for determining the drive of the motor 13 is typically set in a range from a vehicle speed V1 at a time when the transmission ratio is the maximum transmission ratio, and the input rotation number is an idle input rotation number N1 in an idle state of the engine 3, to a vehicle speed V2 at a time when the transmission ratio is the maximum transmission ratio, and the input rotation number is a rotation number N2. The rotation number N2 in this case is an input rotation number by which the discharge oil pressure which can securely achieve the normal operation of the transmission 10. In FIG. 5, the predetermined input rotation number Nth corresponds to an input rotation number at a time when the transmission ratio is the maximum transmission ratio, and the vehicle speed is the predetermined vehicle speed Vth. In this vehicle controlling system 1, the region in which at least the vehicle speed becomes equal to or less than the vehicle speed V1, at the inertia traveling time of the vehicle 2 when the operation of the engine 3 stops and the engine 3 and the input shaft 51 are disconnected by the switching clutch C1, that is, the region in which the input rotation number becomes equal to or less than the idle input rotation number N1 comes to the motor drive traveling region which drives the auxiliary machine 11 including the mechanical pump 16 and the like by the power generated by the motor 13.

In this case, in other words, the predetermined vehicle speed in accordance with the present embodiment corresponds to an upper limit vehicle speed of the motor drive traveling region at the idle traveling time of the vehicle 2 when the operation of the engine 3 stops and the engine 3 and the input shaft 51 are disconnected by the switching clutch C1 (the traveling region which drives the auxiliary machine 11 on the basis of the power of the motor 13). Further, the predetermined vehicle speed may employ a fixed value, but may employ a different value in accordance with a state of the vehicle 2, for example, a temperature, a viscosity and a degree of aged deterioration of the working fluid.

For example, the ECU 7 may change the predetermined vehicle speed in accordance with the temperature of the working fluid. In other words, the ECU 7 may change the predetermined vehicle speed in accordance with the viscosity of the working fluid. For example, the ECU 7 sets the predetermined vehicle speed to a relatively high vehicle speed in accordance that the temperature of the working fluid is higher, in other words, in accordance with the viscosity of the working fluid is smaller, in accordance with the result of detection of the oil temperature sensor or the like within the hydraulic controlling apparatus 6, and sets the predetermined vehicle speed to a relatively low vehicle speed in accordance that the temperature of the working fluid is lower, in other words, in accordance with the viscosity of the working fluid is greater. This is because there is a tendency that the actual discharge oil pressure by the mechanical pump 16 is lowered, in accordance that the temperature of the working fluid rises and the viscosity becomes smaller.

Further, the ECU 7 may change the predetermined vehicle speed, for example, in accordance with a time degradation of the working fluid and the hydraulic controlling apparatus 6. The ECU 7 sets the predetermined vehicle speed to a relatively high vehicle speed in accordance with a progress of the aged deterioration, for example, in accordance with a result of measurement of an elapsed time by a timer or the like. This is because there is a tendency that the oil pressure in the hydraulic controlling apparatus 6 is relatively lowered in accordance with the progress of het aged deterioration of the working fluid, for example, due to a decrease in the pump performance, an increase of a leaking amount in a hydraulic circuit and the like. Further, the ECU 7 can determine the aged deterioration by comparing an initial learning value of a difference between the result of detection of the hydraulic sensor within the hydraulic controlling apparatus 6 and a control instruction pressure applied to the hydraulic controlling apparatus 6 from the ECU 7, with the current value of the difference, and in the case that the aged deterioration is progressed in correspondence thereto, it can set the predetermined vehicle speed to a relatively high vehicle speed.

Since the ECU 7 changes (compensates) the predetermined vehicle speed in accordance with the temperature, the viscosity, the aged deterioration and the like of the working fluid as mentioned above, the vehicle controlling system 1 can appropriately set the motor drive traveling region in accordance with the state of the vehicle 2, as well as driving the motor 13 and limiting the motor drive traveling region driving the auxiliary machine 11 on the basis of the power generated by the motor 13 to the minimum region. As a result, the vehicle controlling system 1 can securely avoid, for example, such a matter that it is impossible to drive the auxiliary machine 11 by the motor 13 in the region in which the discharge oil pressure is lowered by the mechanical pump 16 and a sufficient auxiliary machine performance can not be secured, as well as improving the fuel consumption.

Next, a description will be given of an example of the control in the vehicle controlling system 1 with reference to a flow chart in FIG. 6. In this case, the control routines are repeatedly executed in a control cycle per several milliseconds to several tens of milliseconds.

First of all, the ECU 7 determines whether or not the vehicle 2 is under (forward) traveling, on the basis of the result of detection of the various sensors and detecting apparatuses provided in the respective portions of the vehicle 2 (ST1).

In the case of determining that the vehicle 2 is under traveling (ST1: Yes), the ECU 7 determines whether or not the operation of the engine 3 is in a stop state and the switching clutch C1 is in the released state (ST2).

In the case that the ECU 7 determines that the operation of the engine 3 is in the stop state, and the switching clutch C1 is in the released state (ST2: Yes), it determines whether or not the vehicle speed of the vehicle 2 is equal to or less than the predetermined vehicle speed Vth (ST3).

In the case that the ECU 7 determines that the vehicle speed of the vehicle 2 is equal to or less than the predetermined vehicle speed Vth (ST3: Yes), it drives the motor 13, or carries over the drive state, drives the auxiliary machine 11 including the A/C compressor 14, the negative pressure pump 15, the mechanical pump 16 and the like on the basis of the power generated by the motor 13 (ST4), finishes the current control cycle, and gives way to the next control cycle.

In the case that the ECU 7 determines in ST1 that the vehicle 2 is not under traveling (ST1: No), in the case that it determines in ST2 that the engine 3 is in the operating state or the switching clutch C1 is in the engaged state (ST2: No), or in the case that it determines that the vehicle speed of the vehicle 2 is the higher vehicle speed than the predetermined vehicle speed Vth (ST3: No), it stops the driving of the motor 13, or carries over the stop state (ST5), finishes the current control cycle, and gives way to the next control cycle.

In accordance with the vehicle controlling system 1 on the basis of the embodiment mentioned above, it is provided with the power transmitting apparatus 5 including the input shaft 51 which is transmitted the power from the engine 3 driving the drive wheel 4 and making the vehicle 2 travel and can transmit the power mutually with respect to the drive wheel 4, and the switching clutch C1 which disconnects the engine 3 and the input shaft 51 and can shut off the power transmission between the engine 3 and the input shaft 51, the auxiliary machine 11 which can be driven by the power from the engine 3, and can be driven by the power from the drive wheel 4 transmitted via the input shaft 51, the auxiliary machine driving mechanism 12 which can switch the power transmitted to the auxiliary machine 11 by the power from the engine 3 and the power from the drive wheel 4, the motor 13 which can drive the auxiliary machine 11, and the ECU 7 which controls the motor 13 and drives the auxiliary machine 11 on the basis of the power generated by the motor 13, in the case that the vehicle speed of the vehicle 2 is equal to or less than the predetermined vehicle speed, in the state in which the operation of the engine 3 stops and the engine 3 and the input shaft 51 are disconnected by the switching clutch C1. Accordingly, the vehicle controlling system 1 can appropriately secure the auxiliary machine performance.

### Second Embodiment

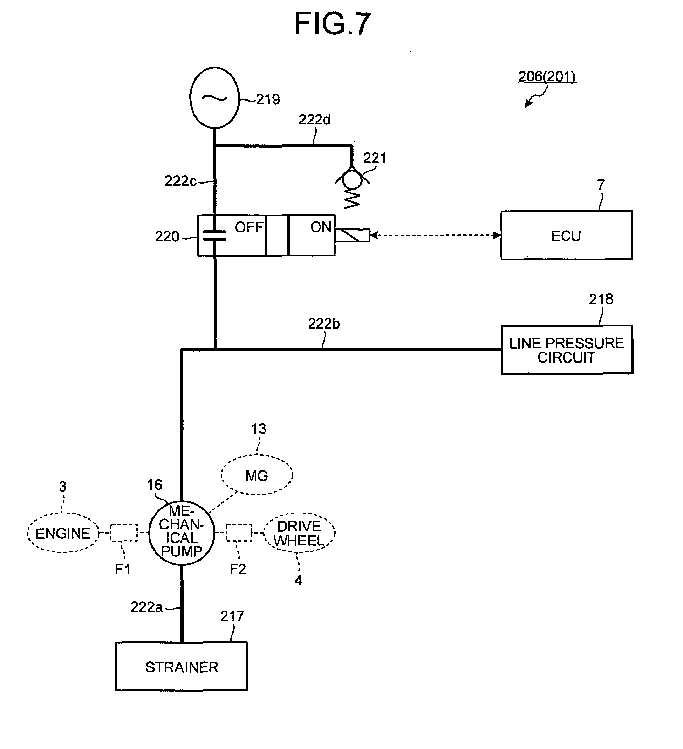

FIG. 7 is a schematic view showing an outline structure of a hydraulic controlling apparatus in accordance with a second embodiment. A vehicle controlling system in accordance with the second embodiment is different from the first embodiment in a point that it is provided with a pressure accumulating mechanism and a switching portion. In addition, with regard to the structures, the operations and the effects which are common to the embodiment mentioned above, an overlapping description will be omitted as much as possible, and FIGS. 1 and 2 will be referred appropriately, with regard to the main structure (same applied to embodiments described later).

A vehicle controlling system 201 in accordance with the present embodiment is provided with a hydraulic controlling apparatus 206, as exemplified in FIG. 7. The hydraulic controlling apparatus 206 is structured such as to further include an accumulator 219 serving as the pressure accumulating mechanism, and a hydraulic circuit which can switch the accumulator 219 between a supply and discharge, and a pressure accumulation.

Describing in more detail, the hydraulic controlling apparatus 206 is structured such as to include a strainer 217, a line pressure circuit 218, the accumulator 219, a switching valve 220 serving as the switching portion, a pressure relief valve 221, and a plurality of oil paths 222a to 222d, together with the mechanical pump 16. The strainer 217 is a portion which sucks a working fluid stored in an oil pan or the like. The line pressure circuit 218 is a hydraulic circuit, for example, including a primary regulator valve or the like, and is a hydraulic circuit for actuating the power transmitting apparatus 5 and the like. The accumulator 219 can accumulate the pressure of the working fluid which is pressurized by the mechanical pump 16. The switching valve 220 can switch the operation state of the accumulator 219 to the supply and discharge state and the pressure accumulation state in accordance with the operation state of the vehicle 2. In this case, the supply and discharge state of the accumulator 219 means a state of supplying and discharging the hydraulic pressure (the pressure) of the working fluid, that is, a state of accumulating the oil pressure of the working fluid or a state of discharging the accumulated oil pressure. The pressure accumulation state of the accumulator 219 means a state of retaining the accumulated pressure.

The strainer 217 is connected to an intake port of the mechanical pump 16 via the oil path 222a. The mechanical pump 16 is connected to the line pressure circuit 218 via the oil path 222b in its discharge port. The mechanical pump 16 sucks the working fluid within the oil pan mechanism via the strainer 217 and the oil path 222a by driving, and discharges the sucked working fluid to the line pressure circuit 218 via the oil path 222b after pressurizing.

The accumulator 219 is connected to the discharge port of the mechanical pump 16 via the oil path 222c branched from the oil path 222b, the switching valve 220 and the like. The switching valve 220 is provided on the oil path 222c, and can switch the oil path 222c to a shutoff state and a released state. The pressure relief valve 221 is connected to the accumulator 219 via the oil path 222d branched from the oil path 222c between the accumulator 219 and the switching valve 220.

The switching valve 220 is structured such as to include an electromagnetic valve, for example, constructed by a solenoid, a spool, an elastic member and the like.
The switching valve 220 is connected to the ECU 7, and is controlled its driving by the ECU 7. The switching valve 220 is constructed by an electromagnetic valve structured, for example, such as to come to a state of shutting off the oil path 222c at a time when the solenoid is not excited (OFF control time), and come to a state of releasing the oil path 222c at a time when the solenoid is excited (ON control time). As a result, the accumulator 219 comes to the pressure accumulation state if the switching valve 220 is controlled to be OFF, and comes to the supply and discharge state in the case that it is controlled to be ON. The pressure relief valve 221 prevents the oil pressure accumulated in the accumulator 219 from becoming excess, by coming to the released state in accordance with the state of the accumulator 219.

The ECU 7 controls the switching valve 220 in accordance with the operation state of the vehicle 2. The ECU 7 controls the switching valve 220 to ON, sets the accumulator 219 to the supply and discharge state, and accumulates the pressure of the working fluid in the accumulator 219, for example, in the case that the engine 3 is in the operating state, or in the case that the operation of the motor 13 is in the stop state in the state in which the operation of the engine 3 stops at the inertia traveling time of the vehicle 2 (the coast travel with accelerator-off) and the engine 3 and the input shaft 51 are disconnected by the switching clutch C1. Accordingly, in the vehicle controlling system 201, the mechanical pump 16 can drive on the basis of the power from the engine 3 or the power from the drive wheel 4 side at a time when the vehicle 2 travels through inertia, and the accumulator 219 can accumulate the oil pressure of the working fluid which is pressurized by the mechanical pump 16. Particularly, since the vehicle controlling system 201 can accumulate the oil pressure in the accumulator 219 by making good use of the kinetic energy cause by the inertia traveling of the vehicle 2 in the case of driving the mechanical pump 16 on the basis of the power from the drive wheel 4 side at a time of inertia traveling of the vehicle 2 so as to accumulate (regenerate and accumulate) in the accumulator 219, it is possible to further improve the fuel consumption. In this case, the ECU 7 may control the switching valve 220 to ON, and set the accumulator 219 to the supply and discharged state in the other operation states than the above, thereby accumulating the oil pressure of the working fluid in the accumulator 219.

Further, the ECU 7 controls the switching valve 220 to ON as occasion demands, for example, in a state in which a predetermined pressure is accumulated in the accumulator 219, and sets the accumulator 219 to the supply and discharge state. Accordingly, the accumulator 219 can supply the oil pressure of the accumulated working fluid in the line pressure circuit 218. The ECU 7 controls the switching valve 220 to ON, sets the accumulator 219 to the supply and discharge state, and discharges the oil pressure of the accumulated working fluid to the line pressure circuit 218 so as to use for actuating the switching clutch C1 and the like, for example, at a time of setting the switching clutch C1 or the like to the engaged state, for starting the engine 3, for restarting the engine 3 under the inertia traveling of the vehicle 2 in this case. As a result, the vehicle controlling system 201 can inhibit a response delay of the oil pressure from being generated in the line pressure circuit 218 or the like, at a time of starting the engine 3, for example, it is possible to improve a reacceleration response of the vehicle 2.

Further, the ECU 7 may be structured, for example, such as to control the switching valve 220 to ON, and discharge the oil pressure accumulated in the accumulator 219 so as to supply to the line pressure circuit 218, in the operation state in which the necessary oil pressure in the vehicle 2 is comparatively enlarged, for example, a rapid shifting time of the vehicle 2, a rapid braking time thereof and the like. In this case, the vehicle controlling system 201 can securely prevent the actual oil pressure supplied to the line pressure circuit 218 from falling short with respect to the necessary oil pressure.

Further, the ECU 7 may be structured such as to control the switching valve 220 to ON, and discharge the oil pressure accumulated in the accumulator 219 so as to supply to the line pressure circuit 218, in the other operation states than the above. In this case, it is preferable that the ECU 7 carries out the control of controlling the switching valve 220 so as to discharge the oil pressure accumulated by the accumulator 219 in preference to the control of driving the mechanical pump 16 on the basis of the power generated by the motor 13, for example, at a time of using the oil pressure of the working fluid.

The ECU 7 is preferably structured, for example, such as to control the vehicle 2 and control the power transmitting apparatus 5 by using the pressure accumulated in the accumulator 219 in the case the operation of the engine 3 stops and the switching clutch C1 comes to the released state after the oil pressure of a previously set first predetermined pressure of oil pressure is accumulated in the accumulator 219, and drive the mechanical pump 16 on the basis of the power generated by the motor 13 so as to control the power transmitting apparatus 5 by using the oil pressure of the pressurized working fluid, after the oil pressure accumulated in the accumulator 219 becomes equal to or less than a previously set second predetermined pressure. In this case, the first predetermined pressure is, for example, an oil pressure corresponding to a oil pressure secured by driving the mechanical pump 16 on the basis of the power generated by the motor 13 plus α, and the second predetermined pressure is, for example a oil pressure of an oil pressure secured by driving the mechanical pump 16 on the basis of the power generated by the motor 13 plus **β** (**α** > **β**). As a result, since the vehicle controlling system 201 can lower a frequency for driving the mechanical pump 16 on the basis of the power of the motor 13, it is possible to lower an electric power loss, and it is possible to further improve the fuel consumption.

In accordance with the vehicle controlling system 201 on the basis of the embodiment described above, it is provided with the accumulator 219 which can accumulate the oil pressure of the working fluid pressurized by the mechanical pump 16, and the switching valve 220 which can switch the operation state of the accumulator 219 to the supply and discharge state of supplying and discharging the oil pressure of the working fluid, and the pressure accumulation state retaining the accumulated oil pressure. Accordingly, the vehicle controlling system 201 can appropriately actuate the power transmitting apparatus 5 and the like, for example, as well as improving the fuel consumption.

### Third Embodiment

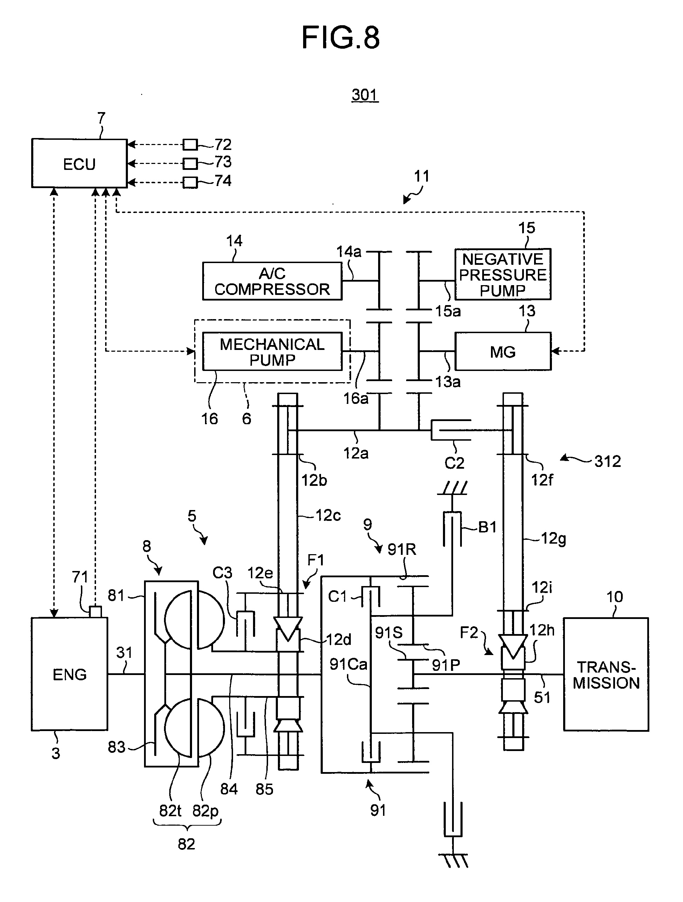

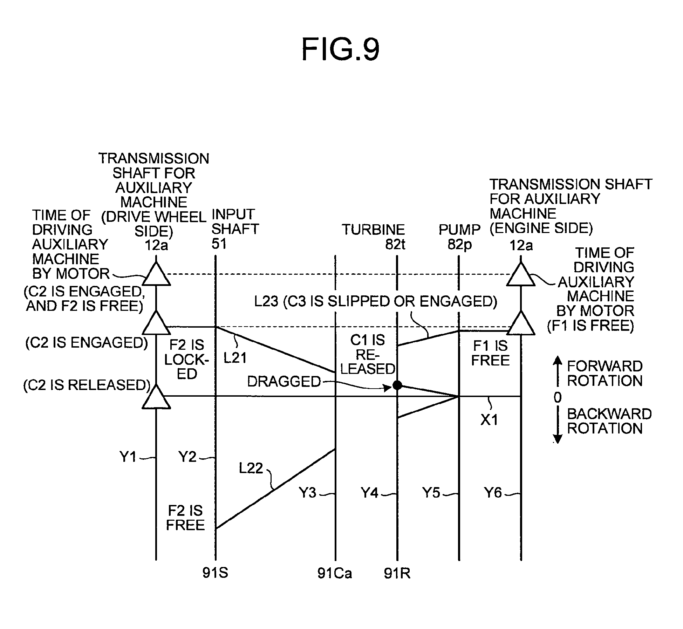

FIG. 8 is a schematic view showing an outline structure of a vehicle controlling system in accordance with a third embodiment, and FIG. 9 is an alignment chart in a state in which an operation of an engine stops (an inertia traveling time) in the vehicle controlling system in accordance with the third embodiment. The vehicle controlling system in accordance with the third embodiment is different from the first embodiment in a point that it is provided with a second auxiliary machine clutch.

A vehicle controlling system 301 in accordance with the present embodiment is provided with an auxiliary machine driving mechanism 312, as exemplified in FIG. 8. The auxiliary machine driving mechanism 312 is structured such as to further include an auxiliary machine clutch C3.

The auxiliary machine clutch C3 is an engagement element for switching an operation state of the auxiliary machine driving mechanism 312, and employs, for example, a hydraulic type multiple disc clutch in the same manner as the auxiliary machine clutch C2 and the like. The auxiliary machine clutch C3 can be switched to a power transmission state (an engaged state) in which the power is transmitted between the pump 82p of the torque converter 8 and the transmission shaft 12a, and a shutoff state (a released state) in which the power transmission is shut off between the pump 82p and the transmission shaft 12a. In this case, the auxiliary machine clutch C3 can be switched to an engaged state connecting the blanket 85 of the torque converter 8 and the outer ring 12e of the one-way clutch F1, and a released state releasing the connection. The auxiliary machine driving mechanism 312 is structured such that the auxiliary machine clutch C3 is actuated on the basis of the pressure of the working fluid supplied from the hydraulic controlling apparatus 6 and the operation state is switched.

In this case, FIG. 9 is an alignment chart in the vehicle controlling system 301, and shows a state in which a fuel cut is executed with respect to the engine 3 (an inertia traveling time). In this case, with regard to the state in which the engine 3 is driven (an engine drive time), since it is approximately the same as the first embodiment (refer to FIG. 3) except the matter that the auxiliary machine clutch C3 is set to the engaged state, a description thereof will be omitted. Further, with regard to a state in which the fuel cut is executed with respect to the engine 3, an overlapping description with the first embodiment will be omitted as much as possible.

The ECU 7 sets the switching clutch C1 to the released state, sets the switching brake B1 to the released state, sets the auxiliary machine clutch C2 to the engaged state, and sets the auxiliary machine clutch C3 to the released state, in the case that the vehicle 2 is under the forward traveling, in a state in which the fuel cut is executed and the operation of the engine 3 stops, that is, in the case that the vehicle 2 travels through inertia in the forward moving direction, as shown in FIG. 9.

Further, the ECU 7 sets the auxiliary machine clutch C3 to a slip state (a power transmission state between the engaged state and the released state) or the engaged state, in the case of starting the engine 3 from the state in which the vehicle 2 travels through inertia in the forward moving direction under the state in which the fuel cut is executed and the operation of the engine 3 stops as mentioned above. At this time, the ECU 7 holds the switching clutch C1 in the released state, and holds the lockup clutch 83 in the released state (the lockup OFF). Accordingly, since the auxiliary machine clutch C2 is in the engaged state by setting the auxiliary machine clutch C3 to the slip state of the engaged state, the power from the drive wheel 4 side is transmitted to the pump 82p via the input shaft 51, the auxiliary machine clutch C2, the transmission shaft 12a, the auxiliary machine clutch C3 and the like, as shown by a solid line L23, and is transmitted to the crank shaft 31. As a result, the crank shaft 31 is rotationally started (cranked), and the engine 3 is so-called push-started. In this case, the turbine 82t is also dragged by the pump 82p so as to rotate. Thereafter, the switching clutch C1 is set to the engaged state after restarting the engine 3.

In this case, since the vehicle controlling system 301 can rotationally start the crank shaft 31 without driving the starter 32 and without setting the lockup clutch 83 to the engaged state (the lockup ON), it is possible to lower an energy which is consumed at a time of restarting the engine 3 regardless of the operation state of the torque converter 8. Further, since the vehicle controlling system 301 can rotationally start the engine 3 so as to restart without actuating (operating) the switching clutch C1 and the lockup clutch 83, it is possible to simplify the control at a time of starting the engine 3 at the inertia traveling time of the vehicle 2.

Further, even in the vehicle controlling system 301 structured as mentioned above, since the ECU 7 controls the motor 13 and drives the auxiliary machine 11 on the basis of the power generated by the motor 13, in the case that the vehicle speed of the vehicle 2 is equal to or less than the predetermined vehicle speed, in the state in which the operation of the engine 3 stops and the engine 3 and the input shaft 51 are disconnected by the switching clutch C1, it is possible to appropriately secure the auxiliary machine performance. At this time, in the case of driving the auxiliary machine 11 by the motor 13, the ECU 7 sets the auxiliary machine clutch C3 to the released state, whereby the one-way clutch F1 blocks the power transmission from the transmission shaft 12a side to the pump 82p side, and the one-way clutch F2 blocks the power transmission from the transmission shaft 12a side to the input shaft 51 side.

In this case, the vehicle controlling system 301 described above may be structured such as to switch the power transmission state between the pump 82p and the transmission shaft 12a only by the auxiliary machine clutch C3, without provision of the one-way clutch F1.

### Fourth Embodiment

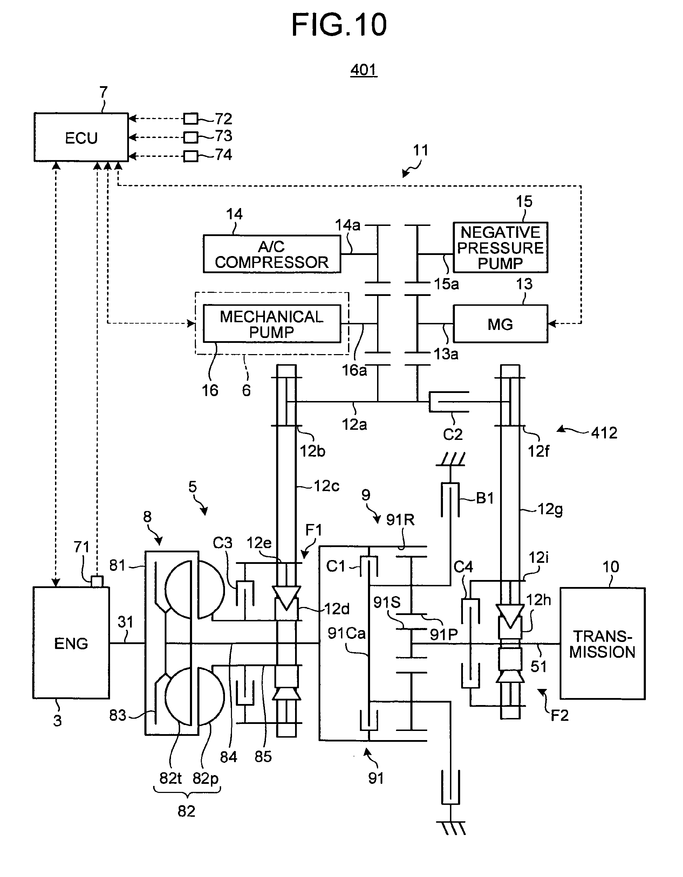

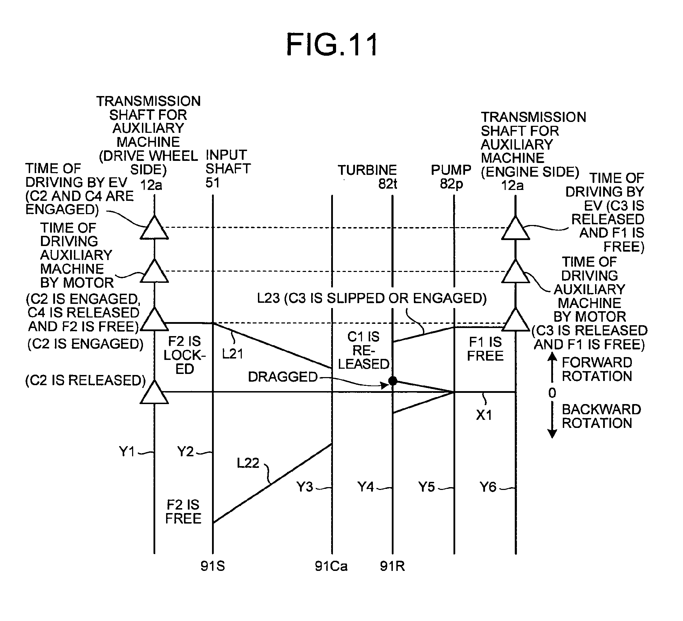

FIG. 10 is a schematic view showing an outline structure of a vehicle controlling system in accordance with a fourth embodiment, and FIG. 11 is an alignment chart in a state in which an operation of an engine stops (an inertia traveling time) in the vehicle controlling system in accordance with the fourth embodiment. The vehicle controlling system in accordance with the fourth embodiment is different from the third embodiment in a point that a third auxiliary machine clutch is provided.

A vehicle controlling system 401 in accordance with the present embodiment is provided with an auxiliary machine driving mechanism 412, as exemplified in FIG. 10. The auxiliary machine driving mechanism 412 is structured such as to further include an auxiliary machine clutch C4.

The auxiliary machine clutch C4 is an engagement element for switching an operation state of the auxiliary machine driving mechanism 412, and employs, for example, a hydraulic type multiple disc clutch, in the same manner as the auxiliary machine clutches C2 and C3. The auxiliary machine clutch C4 can switch to a power transmission state (an engaged state) in which the power is transmitted between the input shaft 51 and the transmission shaft 12a, and a shutoff state (a released state) in which the power transmission between the input shaft 51 and the transmission shaft 12a is shut off. In this case, the auxiliary machine clutch C4 can switch to an engaged state connecting the input shaft 51 and an outer ring 12i of the one-way clutch F2, and a released state releasing the connection. In the auxiliary machine driving mechanism 412, the auxiliary machine clutch C4 is actuated by the pressure of the working fluid supplied from the hydraulic controlling apparatus 6, and the operating state is switched.

In this case, FIG. 11 is an alignment chart in the vehicle controlling system 401, and shows a state (an inertia traveling time) in which the fuel cut is executed with respect to the engine 3. In this case, since a state in which the engine 3 is driven (an engine driving time) is approximately the same as the third embodiment except the matter that the auxiliary machine clutch C4 is set to the released state, a description thereof will be omitted. Further, with regard to the state in which the fuel cut is executed with respect to the engine 3, an overlapping description with the third embodiment will be omitted as much as possible.

As shown in FIG. 11, in the case that the vehicle 2 is under the forward traveling, in the state in which the fuel cut is executed and the operation of the engine 3 stops, that is, in the case that the vehicle 2 travels through inertia in the forward moving direction, the ECU 7 sets the switching clutch C1 to the released state, sets the switching brake B1 to the released state, sets the auxiliary machine clutch C2 to the engaged state, sets the auxiliary clutch C3 to the released state, and sets the auxiliary machine clutch C4 to the released state.

Further, the ECU 7 can transmits the power generated by the motor 13 to the input shaft 51 via the transmission shaft 12a, the auxiliary machine clutch C2, the auxiliary machine clutch C4 and the like, by setting the auxiliary machine clutch C4 to the engaged state. As a result, the vehicle controlling system 401 can make the vehicle 2 travel by using the power generated by the motor 13 as the power for traveling, and a so-called EV travel can be achieved.

Further, even in the vehicle controlling system 401 structured as mentioned above, since the ECU 7 controls the motor 13 and drives the auxiliary machine 11 on the basis of the power generated by the motor 13, in the case that the vehicle speed of the vehicle 2 is equal to or less than the predetermined vehicle speed in the state in which the operation of the engine 3 stops and the engine 3 and the input shaft 51 are disconnected by the switching clutch C1, it is possible to appropriately secure the auxiliary machine performance. At this time, since the ECU 7 sets the auxiliary machine clutch C3 and the auxiliary machine clutch C4 to the released state, in the case of driving the auxiliary machine 11 by the motor 13, the one-way clutch F1 blocks the power transmission from the transmission shaft 12a side to the pump 82p side, and the one-way clutch F2 blocks the power transmission from the transmission shaft 12a side to the input shaft 51 side.

In this case, the vehicle controlling system 401 described above may be structured such as to carry out the switching of the power transmission state between the input shaft 51 and the transmission shaft 12a only by the auxiliary machine clutch C4, without provision of the one-way clutch F2.

### Fifth Embodiment

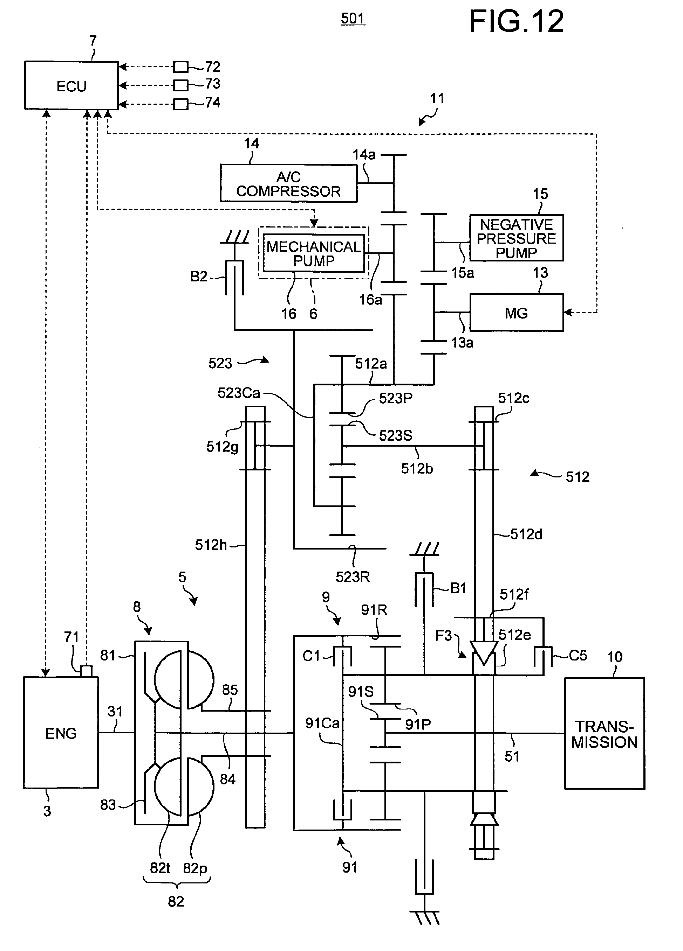

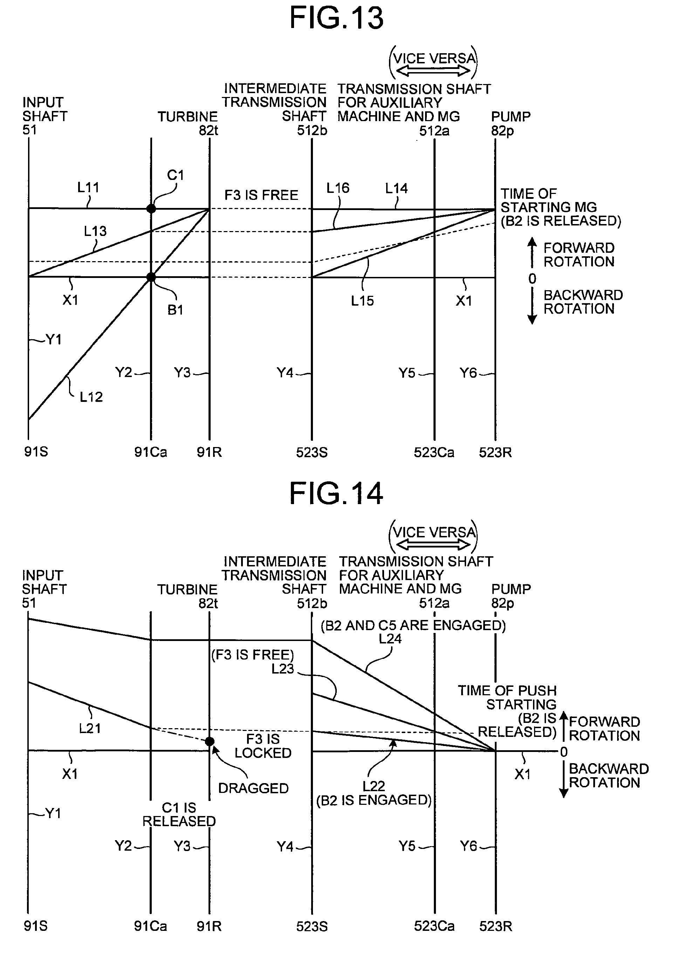

FIG. 12 is a schematic view showing an outline structure of a vehicle controlling system in accordance with a fifth embodiment, FIG. 13 is an alignment chart in a state in which an engine is actuated (an engine driving time) in a vehicle controlling system in accordance with a fifth embodiment, and FIG. 14 is an alignment chart in a state in which an actuation of the engine stops (an inertia traveling time) in the vehicle controlling system in accordance with the fifth embodiment. The vehicle controlling system in accordance with the fifth embodiment is different from the first embodiment in a point that a second planetary gear mechanism is provided.

A vehicle controlling system 501 in accordance with the present embodiment is provided with an auxiliary machine driving mechanism 512, as exemplified in FIG. 12. The auxiliary machine driving mechanism 512 is structured such as to include a planetary gear mechanism 523, a transmission shaft 512a, an intermediate transmission shaft 512b, a one-way clutch F3, an auxiliary machine clutch C5, an auxiliary machine brake B2 and the like, without provision of the one-way clutches F1 and F2, and the auxiliary machine clutch C2 described in the first embodiment.

The planetary gear mechanism 523 is a differential mechanism which is structured such as to include a sun gear 523S constructed as an external gear, a ring gear 523R constructed as an internal gear arranged concentrically with the sun gear 523S, and a carrier 523Ca supporting a pinion gear 523P engaging with the sun gear 523S and the ring gear 523R in such a manner as to freely rotate its own axis and freely revolve, as a plurality of rotating elements which can differentially rotate with each other.

The sun gear 523S is connected to the intermediate transmission shaft 512b in such a manner as to be integrally rotatable. The intermediate transmission shaft 512b is structured such that a belt 512d is wound around an integrally rotatably connected pulley 512c. The belt 512d is wound around an outer ring 512f of the one-way clutch F3 in which an inner ring 512e is connected to the carrier 91Ca so as to be integrally rotatable, and the pulley 512c. The outer ring 512f of the one-way clutch F3 can be connected to the carrier 91Ca via the auxiliary machine clutch C5.

The carrier 523Ca is connected to the transmission shaft 512a so as to be integrally rotatable. The A/C compressor 14, the negative pressure pump 15 and the mechanical pump 16 are engaged with the transmission shaft 512a in their drive shafts 14a, 15a and 16a via gears or the like in such a manner that the power can be transmitted, and can be driven by the power transmitted from the transmission shaft 512a. The motor 13 is structured such that a rotor is integrally rotatably connected to a drive shaft 13a engaging with the transmission shaft 512a via the gear or the like in such a manner that the power can be transmitted, transmits the power to the transmission shaft 512a and can drive the transmission shaft 512a.

In the ring gear 523R, a belt 512h is wound around an integrally rotatably connected pulley 512g. The belt 512h is wound around a blanket 85 and the pulley 512g. The ring gear 523R can be connected to a fixed portion (for example, a casing) via the auxiliary machine brake B2.

The one-way clutch F3 allows the rotation only in one direction and regulates the rotation in the other direction. The one-way clutch F3 is structured such that the inner ring 512e and the outer ring 512f integrally rotate in the case that a rotation number of the inner ring 512e is equal to or more than a rotation number of the outer ring 512f, and the inner ring 512e and the outer ring 512f independently rotate in the case that the rotation number of the inner ring 512e is less than the rotation number of the outer ring 512f. The one-way clutch F3 is structured such as to allow the power transmission from the carrier 91Ca to the intermediate transmission shaft 512b (a lock state), and block the power transmission from the intermediate transmission shaft 512b to the carrier 91Ca (a free state).

The auxiliary machine clutch C5 and the auxiliary machine brake B2 are engagement elements for switching an operation state of the auxiliary machine driving mechanism 512, and employs, for example, a hydraulic type multiple disc clutch in the same manner as the switching clutch C1, the switching brake B1 and the like. The auxiliary machine clutch C5 can switch to a power transmission state (an engaged state) in which the power is transmitted between the intermediate transmission shaft 512b and the carrier 91Ca, and a shutoff state (a released state) in which the power transmission is shut off between the intermediate transmission shaft 512b and the carrier 91Ca. In this case, the auxiliary machine clutch C5 can switch to the engaged state connecting the outer ring 512f of the one-way clutch F3 and the carrier 91Ca, and the released state cancelling the connection. The auxiliary machine brake B2 can selectively connect the ring gear 523R and the fixed portion. In the auxiliary machine driving mechanism 512, the auxiliary machine clutch C5 and the auxiliary machine brake B2 are actuated by the pressure of the working fluid supplied from the hydraulic controlling apparatus 6, and the operation state is switched.

In this case, FIGS. 13 and 14 are alignment charts in the vehicle controlling system 501, FIG. 13 shows a state in which the engine 3 is driven (an engine driving time), and FIG. 14 shows a state in which a fuel cut is executed with respect to the engine 3 (an inertia traveling time). In this case, they show a relative relationship of a gear ratio of the planetary gear mechanism 523 in addition to a relative relationship of a gear ratio of the planetary gear mechanism 91 in a horizontal axial direction. A vertical line Y1 shows the sun gear 91S and the input shaft 51, a vertical line Y2 shows the carrier 91Ca, a vertical line Y3 shows the ring gear 91R and the turbine 82t, a vertical line Y4 shows the sun gear 523S and the intermediate transmission shaft 512b, a vertical line Y5 shows the carrier 523Ca and the transmission shaft 512a, and a vertical line Y6 shows a relative rotation speed of the ring gear 523R and the pump 82p (the crank shaft 31). The intervals among the vertical lines Y1, Y2 and Y3 are defined in accordance with a gear ratio ρ1 of the planetary gear mechanism 91, and on the assumption that the interval between the vertical line Y1 and the vertical line Y2 is set to "1", the interval between the vertical line Y2 and the vertical line Y3 corresponds to the gear ratio ρ1. Intervals among the vertical lines Y4, Y5 and Y6 are defined in accordance with a gear ratio p2 of the planetary gear mechanism 523, and on the assumption that the interval between the vertical line Y4 and the vertical line Y5 is set to "1", the interval between the vertical line Y5 and the vertical line Y6 corresponds to the gear ratio p2. Further, in FIG. 13, solid lines L11 and L14 show a power transmission state at a time when the vehicle 2 is under forward traveling, solid lines L12 and L15 show a power transmission state at a time when the vehicle 2 is under backward traveling, and solid lines L13 and L16 show a power transmission state at a time when the vehicle 2 is under stopping while being neutral. In FIG. 14, solid lines L21 and L22 show a power transmission state at a time when the vehicle 2 is under forward traveling, a solid line L23 shows a power transmission state at a time when the motor 13 drives the auxiliary machine 11, and a solid line L24 shows a power transmission state at a time when the motor makes the vehicle 2 EV travel. In this case, in any of the power transmission states shown in these drawings, the lockup clutch 83 is switched to the released state (the lockup OFF).

The ECU 7 sets the switching clutch C1 to the engaged state, sets the switching brake B1 to the released state, sets the auxiliary machine brake B2 to the released state, and sets the auxiliary machine clutch C5 to the released state, in the case that the engine 3 is in the operating state and the vehicle 2 is under forward traveling, as shown in FIG. 13. In this case, since the auxiliary machine brake B2 is under the released state, the ring gear 523R rotates at the same rotation number as the pump 82p (the crank shaft 31) (the vertical lie Y6). Further, in the planetary gear mechanism 91, since the switching clutch C1 is in the engaged state and the switching brake B2 is in the released state, the sun gear 91S, the carrier 91Ca and the ring gear 91R integrally rotate, as shown by the solid line L11. Accordingly, the rotation number (the vertical lien Y1) of the input shaft 51 becomes the same as the rotation number (the vertical line Y3) of the turbine 82t. In this state, since the auxiliary machine clutch C5 is in the released state, the inner ring 512e and the outer ring 512f independently rotate in the one-way clutch F3. Therefore, the power transmission from the carrier 91Ca side to the intermediate transmission shaft 512b side is blocked. Accordingly, in the planetary gear mechanism 523, as shown by the solid line L14, the sun gear 523S, the carrier 523Ca and the ring gear 523R are rotated by the power transmitted from the pump 82p side. Further, in the auxiliary machine driving mechanism 512, the transmission shaft 512a is rotated on the basis of the rotation of each of the rotating elements of the planetary gear mechanism 523, whereby the auxiliary machine 11 is driven. Accordingly, the auxiliary machine 11 is driven by the power from the engine 3 side.

The ECU 7 sets the switching clutch C1 to the released state, sets the switching brake B1 to the engaged state, sets the auxiliary machine brake B2 to the released state, and sets the auxiliary machine clutch C5 to the released state, in the case that the engine 3 is in the operating state, and the vehicle 2 is under backward traveling, as shown in FIG. 13. In this case, in the planetary gear mechanism 91, the respective rotation numbers of the sun gear 91S, the carrier 91Ca and the ring gear 91R come to a relationship shown by the solid line L12, and in the planetary gear mechanism 523, the respective rotation numbers of the sun gear 523S, the carrier 523Ca and the ring gear 523R come to a relationship shown by the solid line L15. Further, the ECU 7 sets the switching clutch C1 to the released state, sets the switching brake B1 to the released state, sets the auxiliary machine brake B2 to the released state, sets the auxiliary machine clutch C5 to the released state, in the case that the engine 3 is in the operating state, a neutral range is selected by a shift operation apparatus or the like and the vehicle 2 is under stopping, as shown in FIG. 13. In this case, in the planetary gear mechanism 91, the respective rotation numbers of the sun gear 91S, the carrier 91Ca and the ring gear 91R come to a relationship shown by the solid line L13, and in the planetary gear mechanism 523, the respective rotation numbers of the sun gear 523S, the carrier 523Ca and the ring gear 523R come to a relationship shown by the solid line L16. Accordingly, in these cases, the auxiliary machine 11 is driven by the power from the engine 3 side.

In the case of starting the engine 3, the ECU 7 drives the motor 13 as well as setting the auxiliary machine brake B2 to the released state. Accordingly, as illustrated by a dotted line in FIG. 13, the power generated by the motor 13 is transmitted to the ring gear 523R via the transmission shaft 512a and the carrier 523Ca, and is transmitted to the crank shaft 31 from the ring gear 523R via the pump 82p or the like, and the crank shaft 31 is rotationally started (cranked) in the engine 3. At this time, the ECU 7 can suppress a shock at a time of starting the engine 3 by carrying out the control of the output rotation number and the output torque of the motor 13 additionally so as to appropriately regulate the rotation number of the ring gear 523R.

The ECU 7 sets the switching clutch C1 to the released state, sets the switching brake B1 to the released state, sets the auxiliary machine brake B2 to the engaged state, and sets the auxiliary machine clutch C5 to the engaged state, in the case that the vehicle 2 is under forward traveling in the state in which the fuel cut is executed and the operation of the engine 3 stops, that is, in the case that the vehicle 2 travels through inertia in the forward moving direction, as shown in FIG. 14. In this case, in the planetary gear mechanism 91, the sun gear 91S and the carrier 91Ca are driven by the power transmitted from the drive wheel 4 side to the input shaft 51, as shown by a solid line L21, and the ring gear 91R is rotated while being dragged thereby (the vertical axis Y3). In this case, in the planetary gear mechanism 523, since the auxiliary machine clutch C5 is in the engaged state, the intermediate transmission shaft 512b and the sun gear 523S are driven by the carrier 91Ca. In the planetary gear mechanism 523, since the auxiliary machine brake B2 is in the engaged state, the ring gear 523R is maintained in the stop state (the vertical axis Y6). Accordingly, in the planetary gear mechanism 523, the respective rotation numbers of the sun gear 523S, the carrier 523Ca and the ring gear 523R come to a relationship shown by a solid line L22. Therefore, the auxiliary machine 11 is driven by the power from the drive wheel 4 side.

In this case the ECU 7 sets the auxiliary machine brake B2 to the released state, in the case that of starting the engine 3 from the state in which the vehicle 2 travels through inertia in the forward moving direction under the state in which the fuel cut is executed and the operation of the engine stops as mentioned above. Accordingly, as illustrated by a dotted line in FIG. 14, the power of the sun gear 523S is transmitted to the crank shaft 31 via the carrier 523Ca, the ring gear 523R, the pump 82p and the like, the crank shaft 31 is rotationally started (cranked), and the engine 3 is so-called push-started. At this time, the ECU 7 can regulate the rotation number (the vertical axis Y6) of the ring gear 523R, by additionally driving the motor 13 and driving the carrier 523Ca on the basis of the power of the motor 13. Further, the ECU 7 can suppress the shock at a time of starting the engine 3 by carrying out the output torque control of the motor 13 and appropriately regulating the rotation number of the ring gear 523R.

Further, even in the vehicle controlling system 501 constructed as mentioned above, since the ECU 7 controls the motor 13 and drives the auxiliary machine 11 on the basis of the power generated by the motor 13, in the case that the vehicle speed of the vehicle 2 is equal to or less than the predetermined vehicle speed, in the state in which the operation of the engine 3 stops and the engine 3 and the input shaft 51 are disconnected by the switching clutch C1, it is possible to appropriately secure the auxiliary machine performance. At this time, in the case of driving the auxiliary machine 11 by the motor 13, the ECU 7 sets the auxiliary machine brake B2 to the engaged state, and sets the auxiliary machine clutch C5 to the released state, whereby as shown by a solid line L23 in FIG. 14, the auxiliary machine brake B2 blocks the power transmission from the ring gear 523R side to the pump 82p side, and the one-way clutch F3 blocks the power transmission from the intermediate transmission shaft 512b to the carrier 91Ca side.

Further, since the ECU 7 drives the motor 13 as well as setting the auxiliary machine brake B2 to the engaged state, and sets the auxiliary machine clutch C5 to the engaged state, the power generated by the motor 13 is transmitted to the sun gear 523S via the transmission shaft 512a and the carrier 523Ca, and is transmitted to the input shaft 51 from the sun gear 523S via the intermediate transmission shaft 512b, the carrier 91Ca, the sun gear 91S and the like, as shown by a solid line L24 in FIG. 14. As a result, the vehicle controlling system 501 can make the vehicle 2 travel by using the power generated by the motor 13 as the power for traveling, and a so-called EV traveling can be achieved. In this case, in the vehicle controlling system 501, the auxiliary machine brake B2 blocks the power transmission from the ring gear 523R side to the pump 82p side.

In this case, the vehicle controlling system 501 described above may be structured such as to carry out the switching of the power transmission state between the intermediate transmission shaft 512b and the carrier 91Ca only by the auxiliary machine clutch C5, without provision of the one-way clutch F3.

Further, since the vehicle controlling system 501 can be structured such that the starter 32 is not provided, for example, it is possible to suppress a manufacturing cost.

In this case, the vehicle controlling system in accordance with the embodiment of the present invention mentioned above is not limited to the embodiments mentioned above, but can be variously modified within the scope of the claims. The vehicle controlling system in accordance with the present embodiment may be constructed by combining plural sets of the embodiments mentioned above.

The control apparatus of the vehicle controlling system described above may be structured such as to be constructed independently from the ECU 7, be electrically connected to the ECU 7, and give and receive the information of the detection signal, the drive signal, the control instruction and the like with each other. The traveling drive source described above is not limited to the engine. The transmission described above may employ, for example, a manual transmission (MT), a stepped automatic transmission (AT), a toroidal type continuously variable transmission (CVT), a multiple mode manual transmission (MMT), a sequential manual transmission (SMT), a dual clutch transmission (DCT) and the like. The planetary gear mechanisms 91 and 523 described above are not limited to the structure mentioned above.

### Industrial Applicability

As mentioned above, the vehicle controlling system in accordance with the present invention is preferably applies to the vehicle controlling system mounted on the various vehicles.

### Reference Signs List

- 1, 201, 301, 401, 501: VEHICLE CONTROLLING SYSTEM
- 2: VEHICLE
- 3: ENGINE (TRAVELING DRIVE SOURCE)
- 4: DRIVE WHEEL
- 5: POWER TRANSMITTING APPARATUS
- 6, 206: HYDRAULIC CONTROLLING APPARATUS
- 7: ECU (CONTROL APPARATUS)
- 11: AUXILIARY MACHINE
- 12, 312, 412, 512: AUXILIARY MACHINE DRIVING MECHANISM
- 13: MOTOR, MOTOR GENERATOR (ELECTRIC MOTOR)
- 16: MECHANICAL PUMP (PUMP)
- 51: INPUT SHAFT (OUTPUT MEMBER)
- 219: ACCUMULATOR (PRESSURE ACCUMULATING MECHANISM)
- 220: SWITCHING VALVE (SWITCHING PORTION)
- C1: SWITCHING CLUTCH (CLUTCH PORTION)

## Claims

1. A vehicle controlling system comprising:
a power transmitting apparatus including an output member that is transmitted a power from a traveling drive source driving a drive wheel and making a vehicle travel and is capable of transmitting the power mutually with respect to the drive wheel, and a clutch portion that disconnects the traveling drive source and the output member and is capable of shutting off a power transmission between the traveling drive source and the output member;
an auxiliary machine that is drivable by the power from the traveling drive source, and is drivable by the power from the drive wheel transmitted via the output member;
an auxiliary machine driving mechanism that is capable of switching the power transmitted to the auxiliary machine between the power from the traveling drive source and the power from the drive wheel;
an electric motor that is capable of driving the auxiliary machine; and
a control apparatus that controls the electric motor and drives the auxiliary machine on the basis of the power generated by the electric motor, when a vehicle speed of the vehicle is equal to or less than a predetermined vehicle speed, in a state in which an operation of the traveling drive source stops and the traveling drive source and the output member are disconnected by the clutch portion.

2. The vehicle controlling system according to claim 1, wherein the auxiliary machine includes a pump pressurizing a medium used in the vehicle,
the power transmitting apparatus is provided in a transmission route of the power from the traveling drive source to the drive wheel and is actuated by the pressure of the medium so as to transmit the power in accordance with the pressure of the medium, and
the predetermined vehicle speed is a vehicle speed that is in accordance with a necessary flow rate of the medium in the vehicle and a discharge flow rate of the medium by the pump.

3. The vehicle controlling system according to claim 2, wherein the predetermined vehicle speed is changed in accordance with a temperature of the medium.

4. The vehicle controlling system according to claim 2 or 3, wherein the predetermined vehicle speed is changed in accordance with a time degradation of the medium.

5. The vehicle controlling system according to any one of claims 2 to 4, further comprising:
a pressure accumulating mechanism that is capable of accumulating the pressure of the medium pressurized by the pump; and
a switching portion that is capable of switching an operation state of the pressure accumulating mechanism to a supply and discharge state of supplying and discharging the pressure of the medium, and a pressure accumulating state retaining the accumulated pressure.

6. The vehicle controlling system according to claim 5, wherein the control apparatus controls the switching portion and sets the pressure accumulating mechanism to the supply and discharge state so as to accumulate the pressure of the medium, when the traveling drive source is in an operating state, or when the operation of the traveling drive source stops at an inertia traveling time of the vehicle and the traveling drive source and the output member are disconnected by the clutch, and when the operation of the electric motor stops.

7. The vehicle controlling system according to claim 5 or 6, wherein the control apparatus controls the switching portion so as to set the pressure accumulating mechanism to the supply and discharge state, discharge the pressure of the medium and use the pressure for operating the clutch, when setting the clutch portion to an engaged state in which the power is transmittable between the traveling drive source and the output member, at a time of starting the traveling drive source.

8. The vehicle controlling system according to any one of claims 5 to 7, wherein the control apparatus carries out a control of controlling the switching portion so as to discharge the pressure accumulated by the pressure accumulating mechanism in preference to a control of driving the pump by the power generated by the electric motor, at a time of using the pressure of the medium.
